# EUROPÄISCHE PATENTSCHRIFT

(11) **EP 3 168 248 B1**
(45) Veröffentlichungstag und Bekanntmachung des Hinweises auf die Patenterteilung: **31.10.2018**
(21) Anmeldenummer: 15194065.7
(22) Anmeldetag: 11.11.2015
(51) Int. Cl.: C08G 18/48, C08G 18/10, C09D 175/14, C09J 175/14, C08L 75/14, C08L 75/16

(54) **HÄRTUNGSVERFAHREN FÜR POLYURETHANE**
CURING METHOD FOR POLYURETHANES
PROCEDE DE DURCISSEMENT DE POLYURETHANE

(43) Veröffentlichungstag der Anmeldung: 17.05.2017
(73) Patentinhaber: Henkel AG & Co. KGaA, 40589 Düsseldorf (DE); Max-Planck-Gesellschaft zur Förderung der Wissenschaften e.V., 80539 München (DE)
(72) Erfinder: TADEN, Andreas, 40597 Düsseldorf (DE); KIRSCHBAUM, Stefan, 51379 Leverkusen (DE); DAMKE, Jan-Erik, 40589 Düsseldorf (DE); LANDFESTER, Katharina, 55122 Mainz (DE)

(56) Entgegenhaltungen:
- US-A1- 2014 242 322
- STEFAN KIRSCHBAUM ET AL: "Unique Curing Properties through Living Polymerization in Crosslinking Materials: Polyurethane Photopolymers from Vinyl Ether Building Blocks", ANGEWANDTE CHEMIE INTERNATIONAL EDITION, Bd. 54, Nr. 19, 4. Mai 2015 (2015-05-04), Seiten 5789-5792, XP055255833, DE ISSN: 1433-7851, DOI: 10.1002/anie.201412218

## Beschreibung

Die vorliegende Erfindung betrifft Verfahren zur Härtung von Alkenylethergruppen-haltigen Polyurethanen mit feuchtigkeitsreaktiven Endgruppen (rVEPU) mittels eines zweistufigen Härtungsprozesses. Des Weiteren richtet sich die Erfindung auf Alkenylethergruppen-haltige Polyurethane mit Silizium-haltigen Endgruppen sowie die gehärteten Polymere, die mittels des erfindungsgemäßen Verfahrens erhältlich sind bzw. Produkte, die diese enthalten.

Bekannte Verfahren zur Aushärtung von UV-härtbaren Polyurethanen basieren überwiegend auf radikalischer Polymerisation (wie z.B. acrylat-funktionalisierte Polyurethane). Derartige radikalische Mechanismen haben den Nachteil, dass sie gegenüber Sauerstoff empfindlich sind, d.h. die Anwesenheit von Sauerstoff die Reaktion inhibieren kann, was insbesondere für Dünnschichtanwendungen und Beschichtungen ein schwerwiegender Nachteil ist.

Als Alternative sind Alkenylethergruppen-haltige Polyurethane bekannt, die mittels kationischer Polymerisation gehärtet werden können (Kirschbaum et al., Angew. Chem. Int. Ed. 2015, 54, 5789-5792). Die kationische UV Härtung erlaubt dabei die Bereitstellung von "dark cure" Eigenschaften, d.h. nach einem kurzen Strahlungspuls, der für die Aktivierung notwendig ist und die Polymerisation oder Härtung startet, verläuft die Reaktion ohne weitere Bestrahlung, d.h. unabhängig von der UV-Strahlungsquelle. Die Reaktion kann also nach dem Start im Dunkeln (= dark cure) oder auf einer Fertigungsstraße weiterlaufen, was insbesondere für Klebstoffanwendungen, z.B. in voll automatisierten Prozessen, ein wichtiger Vorteil ist. Nachteilig ist allerdings, dass bereits geringe Mengen an nukleophilen Verbindungen den Reaktionsverlauf stören können. Diese nukleophilen Verbindungen, wie beispielsweise Wasser, können durch die Umgebung in die Zusammensetzungen gelangen oder auch über die Oberflächen zu beschichtender oder zu verklebender Substrate bereitgestellt werden.

US 2014/0242322 offenbart eine Einkomponeten-Klebstoffzusammensetzung, die feuchtigkeitshärtbare Gruppen und durch Bestrahlung aushärtbare Gruppen aufweist.

Im Gegensatz zu kationischer Polymerisation ist die feuchtigkeitsabhängige Härtung üblicherweise sehr langsam und benötigt abhängig von der Diffusionsgeschwindigkeit der Wassermoleküle, die von einer Reihe von Faktoren, wie z.B. der Hydrophilie und Morphologie des Materials, den Umgebungsbedingungen, der Dicke des Materials und der zugänglichen Oberfläche, bestimmt werden, Zeiträume von mehreren Stunden oder sogar Tagen. Das ist im Hinblick darauf nachteilig, dass die entsprechenden Zusammensetzungen eine geringe Anfangsfestigkeit aufweisen und es sehr lange dauert bis diese vergelen bzw. sich verfestigen, was insbesondere bei anfänglich niedrigviskosen Zusammensetzungen, die zum Verfließen neigen, nachteilig ist.

Es besteht folglich Bedarf an einem gegenüber dem Stand der Technik verbesserten Verfahren zur Härtung von Polyurethanen, das die oben genannten Nachteile überwindet sowie Polyurethanen, die in solchen Verfahren eingesetzt werden können.

Es wurde nun gefunden, dass sich diese Nachteile durch einen zweistufigen Härtungsprozess und die Verwendung von Alkenylethergruppen-haltigen Polyurethanen mit feuchtigkeitsreaktiven Endgruppen (rVEPU) überwinden lassen. Bei dem Härtungsverfahren wird in einem ersten Schritt eine durch Strahlung initiierte kationische Polyadditionsreaktion der Alkenylethergruppen durchgeführt und in einem zweiten nachfolgenden Schritt eine Polykondensationsreaktion der terminalen Gruppen, die feuchtigkeitsabhängig ist.

Ein erster Gegenstand der vorliegenden Erfindung ist daher ein Verfahren zum Vernetzen oder Härten eines Alkenylethergruppen-haltigen Polyurethanpolymers mit feuchtigkeitsreaktiven Endgruppen, wobei die feuchtigkeitsreaktiven Endgruppen Isocyanatgruppen (-NCO) oder Silangruppen der Formel - [(CH₂)ₚ-Si(R¹)_{3-q}(OR²)_{q}]ᵣmit p, q und r = 1, 2 oder 3, R¹ = C₁₋₄ Alkyl oder -(CH₂)ₚ-Si(R¹)_{3-q}(OR²)_{q} und R² = C₁₋₄ Alkyl, wobei das Polyurethan erhältlich ist durch das Umsetzen mindestens eines Alkenyletherpolyols enthaltend mindestens eine Alkenylethergruppe, insbesondere eine 1-Alkenylethergruppe, und mindestens zwei Hydroxylgruppen (-OH), mit mindestens einem Polyisocyanat enthaltend mindestens zwei Isocyanatgruppen (-NCO), wobei das Polyisocyanat bezogen auf die Isocyanatgruppen relativ zu den Hydroxylgruppen im molarem Überschuss eingesetzt wird um ein NCO-terminiertes Polyurethan zu erhalten, und optional das anschließende Umsetzen des NCO-terminierten Polyurethans mit einem Silan, insbesondere mit einem Silan der Formel X-[(CH₂)ₚ-Si(R¹)_{3-q}(OR²)_{q}]ᵣ, wobei X eine NCO-reaktive Gruppe ist, wobei in einem ersten Schritt die Alkenylethergruppen durch Exposition gegenüber Strahlung kationisch vernetzt werden und in einem zweiten Schritt die feuchtigkeitsreaktiven Gruppen feuchtigkeitsabhängig polymerisiert werden.

Ein weiterer Gegenstand der Erfindung sind Polyurethanpolymere mit Alkenylethergruppen-haltigen Seitenketten und siliziumhaltigen Endgruppen der Formel -[(CH₂)ₚ-Si(R¹)_{3-q}(OR²)_{q}]ᵣ mit p, q und r = 1, 2 oder 3, R¹ = C₁₋₄ Alkyl oder -(CH₂)ₚ-Si(R¹)_{3-q}(OR²)_{q} und R² = C₁₋₄ Alkyl, wobei die Polyurethane erhältlich sind durch das Umsetzen mindestens eines Alkenyletherpolyols enthaltend mindestens eine Alkenylethergruppe, insbesondere eine 1-Alkenylethergruppe, und mindestens zwei Hydroxylgruppen (-OH), mit mindestens einem Polyisocyanat enthaltend mindestens zwei Isocyanatgruppen (-NCO), wobei das Polyisocyanat bezogen auf die Isocyanatgruppen relativ zu den Hydroxylgruppen im molarem Überschuß eingesetzt wird um ein NCO-terminiertes Polyurethan zu erhalten, und das anschließende Umsetzen des NCO-terminierten Polyurethans mit einem Silan, insbesondere einem Silan der Formel X-[(CH₂)ₚ-Si(R¹)_{3-q}(OR²)_{q}]ᵣ, wobei X eine NCO-reaktive Gruppe ist, vorzugsweise eine Amino- oder Hydroxylgruppe, insbesondere eine Aminogruppe.

Die vorliegende Erfindung richtet sich darüber hinaus auf die gehärteten oder vernetzten Polymere, die erhältlich sind nach einem Verfahren gemäß der vorliegenden Erfindung.

"Alkenyletherpolyol", wie hierin verwendet, bezeichnet Verbindungen, die mindestens eine Gruppe der Formel -O-Alkenyl, die an ein Kohlenstoffatom gebunden ist, und mindestens zwei Hydroxylgruppen (-OH) enthalten. Es ist bevorzugt, dass das Alkenyletherpolyol einen organischen Rest umfasst, an den sowohl die Alkenylethergruppe als auch die Hydroxygruppen gebunden sind, d.h. die Hydroxygruppen nicht an die Alkenylgruppe gebunden sind. Es ist ferner bevorzugt, dass die Alkenylethergruppe eine 1-Alkenylethergruppe ist, d.h. die C-C-Doppelbindung benachbart zu dem Sauerstoffatom liegt. Ganz besonders bevorzugt sind Vinylethergruppen, d.h. Gruppen der Formel -O-CH=CH₂.

Der Begriff "Alkyl", wie hierin verwendet, bezeichnet einen linearen oder verzweigten, unsubstituierten oder substituierten gesättigten Kohlenwasserstoffrest, insbesondere Reste der Formel CₙH₂ₙ₊₁. Beispiele für Alkylreste schließen ein, ohne darauf beschränkt zu sein, Methyl, Ethyl, n-Propyl, isoPropyl, n-Butyl, 2-Butyl, tert-Butyl, n-Pentyl, n-Hexyl und ähnliche. "Heteroalkyl", wie hierin verwendet, bezeichnet Alkylreste, in denen mindestens ein Kohlenstoffatom durch ein Heteroatom, wie insbesondere Sauerstoff, Stickstoff oder Schwefel, ersetzt ist. Beispiele schließen, ohne Beschränkung, Ether und Polyether ein, beispielsweise Diethylether oder Polyethylenoxid.

Der Begriff "Alkenyl", wie hierin verwendet, bezeichnet einen linearen oder verzweigten, unsubstituierten oder substituierten Kohlenwasserstoffrest, der mindestens eine C-C Doppelbindung enthält.

"Substituiert", wie hierin insbesondere im Zusammenhang mit Alkyl- und Heteroalkylgruppen verwendet, bezieht sich auf Verbindungen, in denen ein oder mehrere Kohlenstoff- und/oder Wasserstoffatome durch andere Atome oder Gruppen ersetzt sind. Geeignete Substituenten schließen ein, ohne darauf beschränkt zu sein, -OH, -NH₂, -NO₂, -CN, -OCN, -SCN, -NCO, -NCS, -SH, -SO₃H, -SO₂H, -COOH, - CHO und ähnliche.

Der Begriff "organischer Rest", wie hierin verwendet, bezieht sich auf jeden organischen Rest, der Kohlenstoffatome enthält. Organische Reste können insbesondere von Kohlenwasserstoffen abgeleitet sein, wobei beliebige Kohlenstoff- und Wasserstoffatome durch andere Atome oder Gruppen ersetzt sein können. Organische Reste im Sinne der Erfindung enthalten in verschiedenen Ausführungsformen 1 bis 1000 Kohlenstoffatome.

"Epoxid", wie hierin verwendet, bezeichnet Verbindungen, die eine Epoxidgruppe enthalten.

"Cyclisches Carbonat", wie hierin verwendet, bezeichnet ringförmige Verbindungen, die als Ringbestandteil die Gruppe -O-C(=O)-O- enthalten.

Der Begriff "Alkohol" bezeichnet eine organische Verbindung, die mindestens eine Hydroxylgruppe (-OH) enthält.

Der Begriff "Amin" bezeichnet eine organische Verbindung, die mindestens eine primäre oder sekundäre Aminogruppe (-NH₂, -NHR) umfasst.

Der Begriff "Thiol" oder "Mercaptan" bezeichnet eine organische Verbindung, die mindestens eine Thiolgruppe (-SH) enthält.

Der Begriff "Carbonsäure" bezeichnet eine Verbindung, die mindestens eine Carboxylgruppe (-C(=O)OH) enthält.

Der Begriff "Derivat", wie hierin verwendet, bezeichnet eine chemische Verbindung, die gegenüber einer Referenzverbindung durch eine oder mehrerer chemischer Reaktionen verändert ist. Im Zusammenhang mit den funktionellen Gruppen -OH, -COOH, -SH und -NH₂ bzw. den Verbindungsklassen der Alkohole, Carbonsäuren, Thiole und Amine umfasst der Begriff "Derivat" insbesondere die korrespondierenden ionischen Gruppen/Verbindungen und deren Salze, d.h. Alkoholate, Carboxylate, Thiolate und Ammonium(quaternären Stickstoff-)verbindungen. Im Zusammenhang mit den cyclischen Carbonaten, umfasst der Begriff Derivat insbesondere die unten genauer beschriebenen Thioderivate der Carbonate, d.h. Verbindungen in den ein, zwei oder alle drei Sauerstoffatome der Gruppierung -O-C(=O)-O- durch Schwefelatome ersetzt sind.

"Mindestens", wie hierin im Zusammenhang mit einem Zahlenwert verwendet, bezieht sich auf genau diesen Zahlenwert oder mehr. "Mindestens ein" bedeutet somit 1 oder mehr, d.h. beispielsweise 2, 3, 4, 5, 6, 7, 8, 9, 10 oder mehr. Im Zusammenhang mit einer Art von Verbindung bezieht sich der Begriff nicht auf die absolute Anzahl der Moleküle, sondern vielmehr auf die Anzahl der Arten von Stoffen, die unter den jeweiligen Oberbegriff fallen. "Mindestens ein Epoxid" bedeutet somit beispielsweise, dass mindestens eine Art von Epoxid, aber auch mehrere verschiedene Epoxide enthalten sein können.

Der Begriff "härtbar", wie hierin verwendet, bezeichnet eine Veränderung des Zustandes und/oder der Struktur in einem Material durch chemische Reaktion, die für gewöhnlich, aber nicht zwingend, durch mindestens eine Variable, wie die Zeit, Temperatur, Feuchtigkeit, Strahlung, Anwesenheit und Quantität eines härtungs-vermittelnden Katalysators oder Beschleunigers und dergleichen induziert wird. Der Begriff bezieht sich sowohl auf das komplette wie auch partielle Aushärten des Materials.

"Strahlen-härtbar" oder "strahlen-vernetzbar", bezeichnet somit Verbindungen, die bei Exposition gegenüber Strahlung chemisch reagieren und neue Bindungen (intra- oder intermolekular) ausbilden.

"Strahlung", wie hierin verwendet, bezieht sich auf elektromagnetische Strahlung, insbesondere UV-Licht und sichtbares Licht, sowie Elektronenstrahlen. Vorzugsweise findet die Härtung durch Exposition gegenüber Licht, beispielsweise UV-Licht oder sichtbares Licht, statt.

Der Begriff "zweiwertig" oder "2-wertig", wie hierin im Zusammenhang mit Resten oder Gruppen verwendet, bezeichnet einen Rest oder eine Gruppe, die mindestens zwei Anknüpfungsstellen hat, die eine Verbindung zu weiteren Molekülteilen herstellen. Ein zweiwertiger Alkylrest bedeutet somit im Sinne der vorliegenden Erfindung einen Rest der Formel -Alkyl-. Ein solcher zweiwertiger Alkylrest wird hierin auch als Alkylenylrest bezeichnet. "Mehrwertig" bedeutet dementsprechend, dass ein Rest oder eine Gruppe mehr als einen Anknüpfungspunkt besitzt. Beispielsweise kann ein solcher Rest auch drei, vier-, fünf- oder sechswertig sein. "Mindestens 2-wertig" bedeutet somit 2- oder höherwertig.

Der Begriff "Poly-" bezieht sich auf eine sich wiederholende Einheit einer diesem Präfix nachgestellten (funktionellen) Gruppe oder strukturellen Einheit. So bezeichnet ein Polyol eine Verbindung mit mindestens 2 Hydroxygruppen, ein Polyalkylenglykol bezeichnet ein Polymer aus Alkylenglykol-Monomereinheiten.

"Polyisocyanat", wie hierin verwendet, bezieht sich auf organische Verbindungen, die mehr als eine Isocyanatgruppe (-NCO) enthalten.

Die im vorliegenden Text angegebenen Molekulargewichte beziehen sich, soweit nicht anders angegeben, auf das Zahlenmittel des Molekulargewichts (Mₙ). Das zahlenmittlere Molekulargewicht kann basierend auf einer Endgruppenanalyse (OH Zahl gemäß DIN 53240; NCO Gehalt wie bestimmt durch Titration nach Spiegelberger gemäß EN ISO 11909) oder mittels Gelpermeationschromatographie gemäß DIN 55672-1:2007-08 mit THF als Eluent bestimmt werden. Wenn nicht anders angegeben, sind alle angegebenen Molekulargewichte solche, die mittels Endgruppenanalyse bestimmt wurden.

Bei den Alkenylethern kann es sich um aliphatische Verbindungen handeln, welche außer der oder den Alkenylethergruppe(n) mindestens eine andere funktionelle Gruppe enthalten, die reaktiv gegenüber Epoxy bzw. Cyclocarbonatgruppen ist, darunter -OH, -COOH, -SH, -NH₂ und deren Derivate. Die funktionellen Gruppen greifen nucleophil am Ringkohlenstoff des Epoxidrings oder am Carbonyl-Kohlenstoffatom des Cyclocarbonats an, wobei sich der Ring öffnet und eine Hydroxylgruppe entsteht. In Abhängigkeit der reaktiven, nucleophilen Gruppe wird dabei, eine O-C-, N-C, S-C, oder O-/N-/S-C(=O)O-Bindung geknüpft.

Die Herstellung des Alkenyletherpolyols kann beispielsweise über zwei alternative Routen A) und B) realisiert werden.

Bei Route A) wird ein Alkenylether, der mindestens eine Alkenylethergruppe und mindestens eine funktionelle Gruppe ausgewählt aus -OH, -COOH, -SH, -NH₂ und deren Derivaten enthält, mit (i) einem Epoxid oder (ii) einem cyclischen Carbonat oder Derivat davon umgesetzt.

Bei Route B) wird ein Alkenylether, der mindestens eine Alkenylethergruppe und mindestens eine funktionelle Gruppe ausgewählt aus (i) Epoxidgruppen und (ii) cyclischen Carbonatgruppen oder Derivaten davon enthält, mit einem Alkohol, Thiol, einer Carbonsäure oder einem Amin oder Derivaten der vorgenannten umgesetzt.

Unabhängig von der Route entstehen die Alkenyletherpolyole durch Reaktion der Hydroxy-, Thiol-, Carboxyl- oder Aminogruppen mit einer Epoxid- oder cyclischen Carbonatgruppe unter Ringöffnung.

In allen Ausführungsformen werden die Reaktionspartner derart ausgewählt, dass das Reaktionsprodukt, d.h. das erhaltene Alkenyletherpolyol mindestens zwei Hydroxylgruppen trägt. Beispielsweise wird das Alkenyletherpolyol hergestellt durch Umsetzen eines Alkenylethers, enthaltend mindestens eine Alkenylethergruppe und mindestens eine funktionelle Gruppe ausgewählt aus -OH, - COOH, -SH, -NH₂ und deren Derivaten, mit (i) einem Epoxid oder (ii) einem cyclischen Carbonat oder Derivat davon, wobei das derart hergestellte Alkenyletherpolyol ein Alkenyletherpolyol der Formel (I) ist

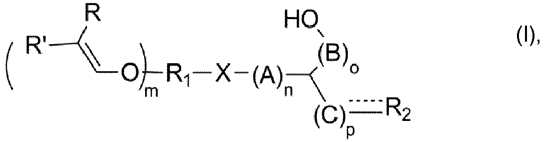

In den Verbindungen der Formel (I) ist
R₁ ein mindestens 2-wertiger organischer Rest, optional mit 1 bis 1000 Kohlenstoffatomen, insbesondere ein mindestens 2-wertiges lineares oder verzweigtes, substituiertes oder unsubstituiertes Alkyl mit 1 bis 50, vorzugsweise 1 bis 20 Kohlenstoffatomen, oder ein mindestens 2-wertiges lineares oder verzweigtes, substituiertes oder unsubstituiertes Heteroalkyl mit 1 bis 50, vorzugsweise 1 bis 20 Kohlenstoffatomen, und mindestens einem Sauerstoff- oder Stickstoffatom,
R₂ ein organischer Rest, optional mit mindestens einer -OH Gruppe und/oder 1 bis 1000 Kohlenstoffatomen, insbesondere ein (optional 2- oder mehrwertiges) lineares oder verzweigtes, substituiertes oder unsubstituiertes Alkyl mit 1 bis 50, vorzugsweise 1 bis 20 Kohlenstoffatomen oder ein (optional 2- oder mehrwertiges) lineares oder verzweigtes, substituiertes oder unsubstituiertes Heteroalkyl mit 1 bis 50, vorzugsweise 1 bis 20 Kohlenstoffatomen und mindestens einem Sauerstoff- oder Stickstoffatom. R₂ kann aber auch ein hochmolekularer Rest, wie beispielweise ein Polyalkylenglykolrest sein. Ein solcher (Poly)alkylenglykolrest kann beispielsweise die Formel -O-[CHRₐCH₂O]_{b}-R_{b} aufweisen, wobei Rₐ H oder ein C₁₋₄-Alkylrest, R_{b} -H oder ein organischer Rest und b 1 bis 100 ist.

In den Verbindungen der Formel (I) ist X O, S, C(=O)O, OC(=O)O, C(=O)OC(=O)O, NRₓ, NRₓC(=O)O, NRₓC(=O)NRₓ oder OC(=O)NRₓ. In bevorzugten Ausführungsformen ist X O, OC(=O)O, NRₓ oder NRₓC(=O)O.

Jedes R und R' ist unabhängig ausgewählt aus H, C₁₋₂₀ Alkyl und C₂₋₂₀ Alkenyl, wobei insbesondere eines von R und R' H und das andere C₁₋₄ Alkyl oder beide H sind. Besonders bevorzugt ist R Wasserstoff (H) und R' ist H oder -CH₃.

Jedes A, B und C ist unabhängig ausgewählt aus CR"R"', wobei R" und R'" unabhängig ausgewählt sind aus H, einer funktionellen Gruppe, wie beispielsweise -OH, -NH₂, -NO₂, -CN, -OCN, -SCN, -NCO, -NCS, -SH, -SO₃H oder -SO₂H, und einem organischen Rest. Insbesondere sind R" und R'" unabhängig H oder C₁₋₂₀ Alkyl. R" und R'" können aber auch gemeinsam oder zusammen mit dem Kohlenstoffatom an das sie gebunden sind einen organischen Rest, einschließlich zyklischer Reste, oder eine funktionelle Gruppe bilden. Beispiele für solche Reste sind =CH₂, =CH-Alkyl oder =C(Alkyl)₂, =O, =S, - (CH₂)ₐₐ- mit aa = 3 bis 5 bzw. Derivate davon, in denen eine oder mehrere Methylengruppen durch Heteroatome wie N, O oder S ersetzt sind. Zwei von R" und R"', die an benachbarte Kohlenstoffatome gebunden sind, können aber auch zusammen eine Bindung bilden. Dadurch wird zwischen den beiden benachbarten Kohlenstoffatome eine Doppelbindung ausgebildet (d.h. -C(R")=C(R")-).
------ steht für eine Einfach- oder Doppelbindung. Wenn es für eine Doppelbindung steht, trägt das Kohlenstoffatom, das an R₂ gebunden ist nur einen Substituenten R" oder R"'.

In den Verbindungen der Formel (I) ist m eine ganze Zahl von 1 bis 10, vorzugsweise 1 oder 2, besonders bevorzugt 1. D.h. die Verbindungen tragen vorzugsweise nur eine oder 2 Alkenylethergruppe(n).

n, p und o sind jeweils 0 oder eine ganze Zahl von 1 bis 10. Dabei erfüllen sie die Bedingung n+p+o=1 oder mehr, insbesondere 1 oder 2. Es ist besonders bevorzugt, dass n oder o 1 ist und die anderen 0 sind. Alternativ ist besonders bevorzugt, dass n oder o 2 ist und die anderen 0 sind. Es ist ferner bevorzugt, dass p 0 ist und eines von n und o 1 oder 2 ist und das andere 0 ist. Ebenfalls bevorzugt sind Ausführungsformen, in denen n und o 1 sind und p 0 ist.

Rₓ ist H, ein organischer Rest oder 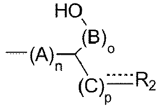 Damit das Alkenyletherpolyol mindestens zwei Hydroxylgruppen aufweist, erfüllt die Verbindung der Formel (I) ferner die Bedingung, dass wenn Rₓ nicht 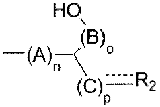 ist,
R₂ mindestens einen Substituenten aufweist, der ausgewählt ist aus -OH und

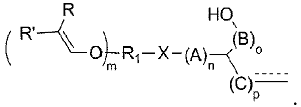

Die zweite Hydroxylgruppe der Verbindung der Formel (I) ist daher entweder als Substituent in dem organischen Rest R₂ enthalten oder X enthält einen weiteren Rest der Formel

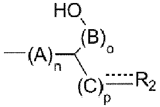

In verschiedenen Ausführungsformen des beschriebenen Herstellungsverfahrens zur Darstellung eines Alkenyletherpolyols ist der Alkenylether, der mindestens eine Alkenylethergruppe und mindestens eine funktionelle Gruppe ausgewählt aus -OH, -COOH, -SH, -NH₂ und deren Derivaten enthält, ein Alkenylether der Formel (II).

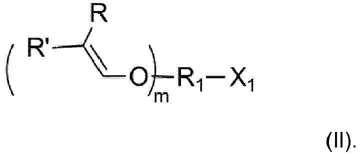

Ein solcher Alkenylether kann beispielsweise verwendet werden, um ein Alkenyletherpolyol der Formel (I) zu synthetisieren, indem er mit einem Epoxid oder einem cyclischen Carbonat umgesetzt wird.

In den Verbindungen der Formel (II) sind R₁, R, R' und m wie oben für Formel (I) definiert. Insbesondere sind die oben für die Verbindungen der Formel (I) beschriebenen bevorzugten Ausführungsformen von R₁, R, R' und m in gleicher Weise auf die Verbindungen der Formel (II) übertragbar.

In den Verbindungen der Formel (II) ist
X₁ eine funktionelle Gruppe ausgewählt aus -OH, -COOH, -SH, -NHR_{y} und deren Derivaten, und R_{y} ist H oder ein organischer Rest, vorzugsweise H.

Die Derivate der funktionellen Gruppen -OH, -COOH, -SH, -NHR_{y} sind vorzugsweise die bereits oben im Zusammenhang mit der Definition des Begriffs beschriebenen ionischen Varianten, die sich durch Entfernen bzw. Bindung eines Protons ergeben, hierbei insbesondere die Alkoholate, Thiolate und Carboxylate, ganz besonders bevorzugt die Alkoholate.

Besonders bevorzugt ist X₁ -OH oder -O⁻ oder -NH₂.

Eine Ausführungsform des beschriebenen Verfahrens zur Herstellung der Alkenyletherpolyole ist weiterhin dadurch gekennzeichnet, dass in dem Alkenylether der Formel (II) m 1 ist, X₁ -OH oder -NH₂, vorzugsweise -OH, ist, R₁ ein zweiwertiger, linearer oder verzweigter C₁₋₁₀ Alkylrest (Alkylenylrest), insbesondere Ethylenyl, Propylenyl, Butylenyl, Pentylenyl oder Hexylenyl, ist, und eines von R und R' H und das andere H oder -CH₃ ist.

Bei den Alkenylethern, die im Rahmen der beschriebenen Verfahren zur Herstellung der Alkenyletherpolyole eingesetzt werden können, insbesondere denen der Formel (II), kann es sich z. B. um Reaktionsprodukte von verschiedenen optional substituierten Alkanolen (Monoalkohole und Polyole) mit Acetylen handeln. Konkrete Beispiele schließen ein, ohne darauf beschränkt zu sein, 4-Hydroxybutylvinylether (HBVE) und 3-Aminopropylvinylether (APVE).

Eine weitere Ausführungsform des beschriebenen Verfahrens zur Herstellung der Alkenyletherpolyole ist dadurch gekennzeichnet, dass das Epoxid, das mit dem Alkenylether umgesetzt wird, ein Epoxid der Formel (III) oder (lila) ist

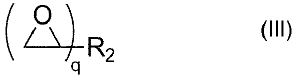

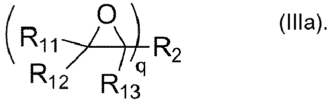

In Verbindungen der Formel (III) und (lila) ist R₂ wie oben für Formel (I) definiert.

R₁₁, R₁₂ und R₁₃ sind unabhängig voneinander H oder ein organischer Rest, optional mit mindestens einer -OH Gruppe, insbesondere ein lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom.

q ist eine ganze Zahl von 1 bis 10, vorzugsweise 1 oder 2.

Epoxyverbindungen, die in den Verfahren zur Herstellung von Alkenyletherpolyolen Anwendung finden können, sind demnach vorzugsweise lineare oder verzweigte, substituierte oder unsubstituierte Alkane mit einer Kohlenstoffatomanzahl von 1 bis 1000, vorzugsweise 1 bis 50 oder 1 bis 20, die mindestens eine Epoxygruppe tragen. Optional können diese Epoxyverbindungen zusätzlich noch eine oder mehrere Hydroxygruppen tragen, wodurch der Hydroxyl-Funktionalisierungsgrad des aus der Reaktion eines gegenüber Epoxiden reaktiven Alkenylethers, wie zuvor beschrieben, mit einem Epoxid entstandenen Alkenyletherpolyols hoch ist. Dadurch wiederum kann in späteren Polymerisierungsreaktionen die Quervernetzungsdichte des gewünschten Polymers kontrolliert und gesteuert werden.

Bei der Reaktion einer gegenüber Epoxiden reaktiven Alkenyletherverbindung (Alkenylether mit mindestens einer funktionellen Gruppe ausgewählt aus -OH, -COOH, -SH, -NH₂ und deren Derivaten) entsteht unter Ringöffnung des Epoxids ein Alkohol. Aus der Reaktionen eines ersten Alkohols oder einer in diesem Kontext chemisch verwandten Verbindung (Amin, Thiol, Carbonsäure, etc.) mit einem Epoxid wird somit die alkoholische Gruppe im Zuge der Bindungsknüpfung "regeneriert".

In verschiedenen Ausführungsformen kann die Epoxyverbindung mehr als eine Epoxygruppe tragen. Dies ermöglicht die Umsetzung einer solchen Epoxyverbindung mit mehr als einer gegenüber Epoxiden reaktiven Alkenyletherverbindung, beispielsweise einem Aminoalkenylether oder Hydroxyalkenylether.

In besonders bevorzugten Ausführungsformen ist das Epoxid ein Epoxid der Formel (III), wobei q 1 oder 2 ist, und wenn q 2 ist, R₂-CH₂-O-C₁₋₁₀-Alkylenyl-O-CH₂- ist, und wenn q 1 ist, R₂ -CH₂-O-C₁₋₁₀-Alkyl ist.

Beispiele für Epoxyverbindugen, die in den Herstellungsverfahren der Alkenyletherpolyole zum Einsatz kommen können, sind insbesonders Glycidylether, wie z.B., ohne Einschränkung, 1,4-Butandioldiglycidylether (BDDGE) und Isopropylglycidylether (IPGE).

In verschiedenen Ausführungsformen, ist das Alkenyletherpolyol der Formel (I) durch Umsetzen eines Alkenylethers der Formel (II) mit einem Epoxid der Formel (III) oder (lila) darstellbar.

Anstelle eines Epoxids kann es sich bei den Verbindungen, die mit den gegenüber Epoxiden reaktiven Verbindungen (Alkenyletherverbindungen) umgesetzt werden, auch um cyclische Carbonate oder deren Derivate handeln. Cyclische Carbonatverbindungen unterliegen einer ähnlich den Epoxiden gearteten Reaktivität gegenüber den als Reaktionspartner dienenden Verbindungen, die sowohl Epoxide als auch cyclische Carbonatverbindungen unter Ringöffnung und "Regeneration" einer alkoholischen funktionellen Gruppe nucleophil am, im Falle eines Epoxids, Methylen des Epoxidrings, oder, im Falle eines cyclischen Carbonats, Carbonyl-Kohlenstoffatom addieren, wodurch, in Abhängigkeit des reaktiven, nucleophilen Restes, eine O-C-, N-C, S-C, oder O-/N-/S-C(=O)O-Bindung geknüpft wird.

Die cyclischen Carbonate, welche im beschriebenen Verfahren zur Herstellung der Alkenyletherpolyole mit einem Alkenylether, insbesondere einem Alkenylether der Formel (II), umgesetzt werden können, sind in bevorzugten Ausführungsformen Ethylencarbonate der Formel (IV) oder (IVa)

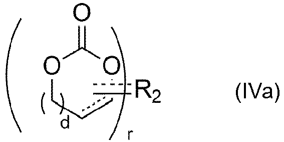

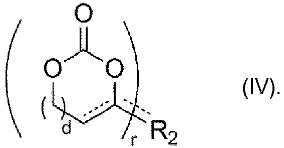

In Verbindungen der Formel (IV) und (IVa) ist R₂ wie für Formel (I), (III) und (lila) definiert. Insbesondere ist R₂ ein C₁₋₁₀ Hydroxyalkyl. In weiteren Ausführungsformen kann R₂ =CH₂ sein.

------ ist eine Einfach- oder Doppelbindung, vorzugsweise eine Einfachbindung. Es ist selbstverständlich, dass wenn der Ring eine Doppelbindung enthält, R₂ nicht über eine exo-Doppelbindung sondern über eine Einfachbindung gebunden ist und umgekehrt.

d ist 0, 1, 2, 3, 4 oder 5, vorzugsweise 0 oder 1, besonders bevorzugt 0, und r ist eine ganze Zahl von 1 bis 10, vorzugsweise 1 oder 2, ganz besonders bevorzugt 1.

Wenn d 1 ist, d.h. das Cyclocarbonat ein 1,3-Dioxan-2-on ist, kann R₂ in der 4- oder 5-Position sein, ist aber vorzugsweise in der 5-Position.

Beispielhafte cyclische Carbonate schließen ein, ohne darauf beschränkt zu sein, 1,3-Dioxolan-2-on, 4,5-Dehydro-1,3-Dioxolan-2-on, 4-Methylen-1,3-Dioxolan-2-on, und 1,3-Dioxan-2-on, die in der 4- bzw. 5-Position mit R₂ substituiert sind.

In verschiedenen Ausführungsformen der beschriebenen Verfahren zur Herstellung der Alkenyletherpolyole werden cyclische Carbonat eingesetzt, die Derivate der Carbonate der Formeln (IV) und (IVa) sind. Beispielhafte Derivate schließen solche ein, die an den Ring-Methylengruppen, insbesondere denen die nicht den R₂ Rest tragen, substituiert sind, beispielsweise mit organischen Resten, insbesondere linearen oder verzweigten, substituierten oder unsubstituierten Alkyl- oder Alkenylresten mit bis zu 20 Kohlenstoffatomen, insbesondere =CH₂ und -CH=CH₂, oder linearen oder verzweigten, substituierten oder unsubstituierten Heteroalkyl- oder Heteroalkenylresten mit bis zu 20 Kohlenstoffatomen und mindestens einem Sauerstoff- oder Stickstoffatom, oder funktionellen Gruppen, wie beispielsweise -OH oder -COOH. Beispiele für solche Derivate schließen beispielsweise 4-Methylen-1,3-Dioxolan-2-on, das an der 5-Position den R₂ Rest trägt, oder di-(Trimethylolpropan)dicarbonat, wobei der R₂ Rest in der 5-Position ein Methylen-Trimethylolmonocarbonatrest ist.

In verschiedenen Ausführungsformen in denen der R₂ Rest über eine Einfachbindung gebunden ist, kann das Ring-Kohlenstoffatom, dass den R₂ Rest trägt mit einem weiteren Substituenten, der wie die oben genannten Substituenten für die anderen Ring-Methylengruppen definiert ist, substituiert sein.

Weitere Derivate sind solche in denen eines oder beide der Ring-Sauerstoffatome durch Schwefelatome ersetzt sind sowie solche in denen alternativ oder zusätzlich das Carbonyl-Sauerstoffatom durch ein Schwefelatom ersetzt ist. Ein besonders bevorzugtes Derivat ist das 1,3-Oxathiolan-2-thion.

In verschiedenen Ausführungsformen ist das cyclische Carbonat 4-Methylen-1,3-Dioxolan-2-on, das an der 5-Position den R₂ Rest trägt. Wenn ein solches cyclisches Carbonat mit einem Alkylether umgesetzt wird, der als reaktive Gruppe eine Aminogruppe trägt, kann sich eine Verbindung der Formel (la) bilden:

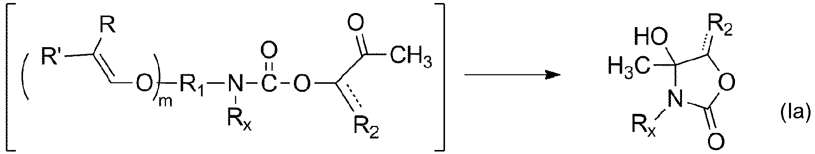

In dieser Verbindung sind m, R₁, R, R', R₂ und Rₓ wie oben für die Verbindungen der Formel (I)-(IV) definiert. Diese Verbindungen der Formel (la) enthalten keine Alkenylethergruppe und können daher zwar als Polyole für die Herstellung von Polyurethanen verwendet werden, allerdings nur in Kombination mit weiteren Polyolen, die Alkenylethergruppen enthalten. Solche Verbindungen der Formel (la) sind daher erfindungsgemäß nicht bevorzugt.

Bei der Umsetzung der vorstehend beschriebenen Cyclocarbonate und deren Derivate der Formeln (IV) und (IVa) mit einer Verbindung der Formel (II), ist in verschiedenen Ausführungsformen in den Verbindungen der Formel (II) (i) X₁ -NH₂ oder ein Derivat davon, und q oder r ist 1; oder (ii) X₁ ist -OH oder ein Derivat davon, und q oder r ist 2.

In weiteren Ausführungsformen ist das Alkenyletherpolyol durch Umsetzen der in Route B) aufgeführten Verbindungen darstellbar. Dabei wird das Alkenyletherpolyol hergestellt durch Umsetzen eines Alkenylethers, enthaltend mindestens eine Alkenylethergruppe und mindestens eine funktionelle Gruppe ausgewählt aus (i) Epoxidgruppen und (ii) cyclischen Carbonatgruppen oder Derivaten davon, mit einem Alkohol, Thiol, einer Carbonsäure oder einem Amin oder Derivaten der vorgenannten.

In verschiedenen Ausführungsformen dieses Verfahrens ist das Alkenyletherpolyol ein Alkenyletherpolyol der Formel (V)

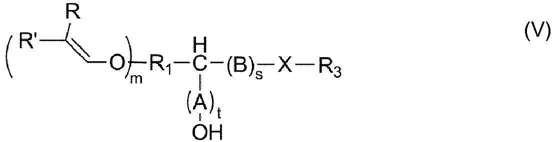

In den Verbindungen der Formel (V) ist R₁ wie oben für die Verbindungen der Formel (I) definiert. R₃ ist ein organischer Rest, optional mit mindestens einer -OH Gruppe und/oder 1 bis 1000 Kohlenstoffatomen, insbesondere ein (optional 2- oder mehrwertiges) lineares oder verzweigtes, substituiertes oder unsubstituiertes Alkyl mit 1 bis 50, vorzugsweise 1 bis 20 Kohlenstoffatomen oder ein (optional 2- oder mehrwertiges) lineares oder verzweigtes, substituiertes oder unsubstituiertes Heteroalkyl mit 1 bis 50, vorzugsweise 1 bis 20 Kohlenstoffatomen und mindestens einem Sauerstoff- oder Stickstoffatom. R₂ kann aber auch ein hochmolekularer Rest, wie beispielweise ein Polyalkylenglykolrest sein. Ein solcher (Poly)alkylenglykolrest kann beispielsweise die Formel -O-[CHRₐCH₂O]_{b}-R_{b} aufweisen, wobei Rₐ H oder ein C₁₋₄-Alkylrest, R_{b} -H oder ein organischer Rest oder 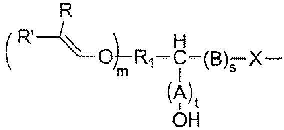 ist und b 1 bis 100 ist.

In den Verbindungen der Formel (V) ist X O, S, OC(=O), OC(=O)O, OC(=O)OC(=O), NR_{z}, NR_{z}C(=O)O, NR_{z}C(=O)NR_{z} oder OC(=O)NR_{z}. In bevorzugten Ausführungsformen ist X O, OC(=O)O, NR_{z} oder OC(=O)NR_{z}.

Jedes R und R' ist unabhängig ausgewählt aus H, C₁₋₂₀ Alkyl und C₂₋₂₀ Alkenyl, wobei insbesondere eines von R und R' H und das andere C₁₋₄ Alkyl oder beide H sind. Besonders bevorzugt ist R H und R' ist H oder -CH₃.

Jedes A und B ist unabhängig ausgewählt aus CR"R"', wobei R" und R'" unabhängig ausgewählt sind aus H, einer funktionellen Gruppe, wie beispielsweise -OH, -NH₂, -NO₂, -CN, -OCN, -SCN, -NCO, -NCS, -SH, -SO₃H oder -SO₂H, und einem organischen Rest. Insbesondere sind R" und R'" unabhängig H oder C₁₋₂₀ Alkyl. R" und R'" können aber auch gemeinsam oder zusammen mit dem Kohlenstoffatom an das sie gebunden sind einen organischen Rest, einschließlich zyklischer Reste, oder eine funktionelle Gruppe bilden. Beispiele für solche Reste sind =CH₂, =CH-Alkyl oder =C(Alkyl)₂, =O, =S, -(CH₂)ₐₐ- mit aa = 3 bis 5 bzw. Derivate davon, in denen eine oder mehrere Methylengruppen durch Heteroatome wie N, O oder S ersetzt sind. Zwei von R" und R"', die an benachbarte Kohlenstoffatome gebunden sind, können aber auch zusammen eine Bindung bilden. Dadurch wird zwischen den beiden benachbarten Kohlenstoffatome eine Doppelbindung ausgebildet (d.h. -C(R")=C(R")-).

In den Verbindungen der Formel (V) ist m eine ganze Zahl von 1 bis 10, vorzugsweise 1 oder 2, besonders bevorzugt 1. D.h. die Verbindungen tragen vorzugsweise nur eine oder 2 Alkenylethergruppe(n).

s und t sind jeweils 0 oder eine ganze Zahl von 1 bis 10. Dabei erfüllen sie die Bedingung s+t=1 oder mehr, insbesondere 1 oder 2. Es ist besonders bevorzugt, dass s oder t 1 ist und die andere 0 ist.

R_{z} ist H, ein organischer Rest oder 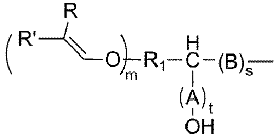 Damit das Alkyletherpolyol der Formel (V) die Bedingung erfüllt, dass es mindestens zwei Hydroxylgruppen trägt, ist wenn R_{z} nicht 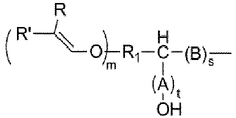 ist,
R₃ mit mindestens einem Substituenten substituiert, der ausgewählt ist aus -OH und

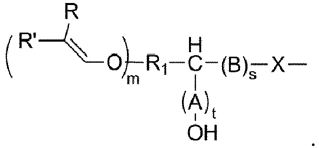

In weiteren bevorzugten Ausführungsformen ist das Verfahren dadurch gekennzeichnet, dass der Alkenylether, der mindestens eine Alkenylethergruppe und mindestens eine funktionelle Gruppe ausgewählt aus (i) Epoxidgruppen und (ii) cyclischen Carbonatgruppen oder Derivaten davon enthält, ein Alkenylether der Formel (VI) oder (VII) ist

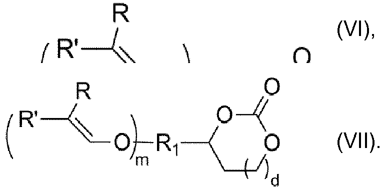

In den Verbindungen der Formel (VI) oder (VII) sind R₁, R, R' und m wie oben für die Verbindungen der Formeln (I) und (II) definiert.
d ist wie oben für die Formeln (IV) und (IVa) definiert, d.h. d ist 0, 1, 2, 3, 4 oder 5, vorzugsweise 0 oder 1, besonders bevorzugt 0.

In besonders bevorzugten Ausführungsformen ist R₁ in den Alkenylethern der Formel (VI) oder (VII) -C₁₋₁₀-Alkylenyl-O-CH₂-.

Die Epoxygruppen tragenden Alkenylether der Formel (VI) können am Epoxyrest substituiert sein, d.h. die Methylengruppen des Oxiranrings können, wie in Formel (lila) gezeigt, mit R₁₁-R₁₃ substituiert sein.

In verschiedenen Ausführungsformen sind die Alkenylether der Formel (VII) am Cyclocarbonatring substituiert oder der Cyclocarbonatring ist durch ein entsprechendes Derivat ersetzt. Geeignete substituierte Cyclocarbonate sowie Derivate davon sind solche, die oben im Zusammenhang mit Formel (IV) und (IVa) beschrieben wurden. Insbesondere ist der Cyclocarbonatrest vorzugsweise ein 1,3-Dioxolan-2-on- oder 1,3-Dioxan-2-on-Rest, der ggf. substituiert sein kann, beispielsweise mit einer Methylengruppe.

Geeignete Verbindungen der Formel (VI) schließen ein, ohne darauf beschränkt zu sein, Vinylglycidylether und 4-Glycidylbutylvinylether (GBVE), wobei letzterer durch Umsetzen von 4-Hydroxybutylvinylether mit Epichlorhydrin darstellbar ist.

Geeignete Verbindungen der Formel (VII) schließen ein, ohne darauf beschränkt zu sein, 4-(Ethenyloxymethyl)-1,3-Dioxolan-2-on, das beispielsweise durch Umesterung von Glycerincarbonat mit Ethylvinylether darstellbar ist oder 4-Glycerincarbonat(4-butylvinylether)ether (GCBVE), das durch Epoxidierung von Hydroxybutylvinylether (HBVE) und anschließende CO₂-Insertion darstellbar ist.

In verschiedenen Ausführungsformen wird der Alkenylether, der mindestens eine Alkenylethergruppe und mindestens eine funktionelle Gruppe ausgewählt aus (i) Epoxidgruppen und (ii) cyclischen Carbonatgruppen oder Derivaten davon enthält, insbesondere einer der Formel (VI) oder (VII) mit einem Alkohol umgesetzt. Bei dem Alkohol kann es sich um ein Diol oder Polyol oder ein entsprechendes Alkoholat handeln. Insbesondere kann der Alkohol ein Polyalkylenglykol der Formel HO-[CHRₐCH₂O]_{b}-H sein, wobei Rₐ H oder ein C₁₋₄-Alkylrest und b 1 bis 100, insbesondere 1 bis 10, ist.

Route B) stellt somit eine alternative Ausführungsform dar, in der die Epoxid- oder die cyclischen Carbonatverbindungen (beispielsweise Ethylencarbonat- oder Trimethylencarbonatverbindungen) mindestens eine oder mehrere Alkenylethergruppen aufweisen. Die Umsetzung dieser Epoxid- oder cyclischen Carbonatverbindungen mit gegenüber Epoxiden oder im Kontext dieser Erfindung chemisch ähnlich reagierenden Verbindungen (cyclische Carbonate) reaktiven Verbindungen, insbesondere solchen, die -OH, -COOH, -SH, -NH₂ und ähnliche Gruppen oder deren Derivate tragen - beispielsweise entsprechend funktionalisierte, vorzugsweise mehrfach entsprechend funktionalisierte lineare oder verzweigte, gesättigte oder teilweise ungesättigte, zusätzlich substituierte oder unsubstituierte, zyklische oder lineare (Hetero)Alkyle und (Hetero)Aryle - ergibt die gewünschten Alkenyletherpolyole.

Beispiele für Verbindungen, die mindestens eine der Gruppen -OH, -COOH, -SH, -NH₂ und deren derivatisierte Formen aber keine Alkenylethergruppen aufweisen, sind beispielsweise, ohne Einschränkung, Glykole, Polyglykole, Polyole, Aminosäuren und Amine, wie zum Beispiel Glycin, Glycerol, Hexamethylendiamin, 1,4-Butandiol und 1,6-Hexandiol.

Bei den mittels der beschriebenen Verfahren herstellbaren oder erhältlichen Alkenyletherpolyole handelt es sich beispielsweise um Verbindungen der Formeln (I), (la) und (V), wie oben definiert.

In verschiedenen Ausführungsformen der Alkenyletherpolyole der Formel (I) ist:
(1) m = 1; R und R' sind H oder R ist H und R' ist Methyl; R₁ ist C₁₋₁₀ Alkylenyl, insbesondere C₁₋₆ Alkylenyl, X ist O, A und B sind CH₂, n und o sind 1 oder 0 und p ist 0, wobei n+o=1, und R₂ ist ein organischer Rest, der mit -OH substituiert ist oder einen weiteren Rest der Formel 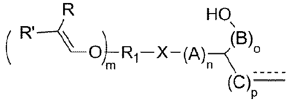 trägt wobei R₁, m, R, R', A, B, C, n, o und p wie vorstehend definiert sind; oder
(2) m = 1; R und R' sind H oder R ist H und R' ist Methyl; R¹ ist C₁₋₁₀ Alkylenyl, insbesondere C₁₋₆ Alkylenyl, X ist NRₓ, A und B sind CH₂, n und o sind 1 oder 0 und p ist 0, wobei n+o=1, Rₓ ist H oder 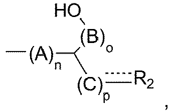 wobei A, B, C, n, o und p wie vorstehend definiert sind; und R₂ ist ein organischer Rest wie oben definiert, der wenn R_{X} H ist mit -OH substituiert ist oder einen weiteren Rest der Formel 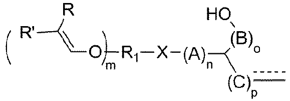 trägt wobei R₁, m, R, R', A, B, C, n, o und p wie vorstehend definiert sind; oder
(3) m = 1; R und R' sind H oder R ist H und R' ist Methyl; R¹ ist C₁₋₁₀ Alkylenyl, insbesondere C₁₋₆ Alkylenyl, X ist OC(=O)O, A und B sind CH₂, n und o sind 1 oder 0 und p ist 0, wobei n+o=1, und R₂ ist ein organischer Rest, der mit -OH substituiert ist oder einen weiteren Rest der Formel 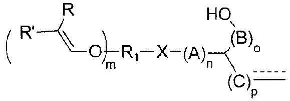 trägt wobei R₁, m, R, R', A, B, C, n, o und p wie vorstehend definiert sind; oder
(4) m = 1; R und R' sind H oder R ist H und R' ist Methyl; R¹ ist C₁₋₁₀ Alkylenyl, insbesondere C₁₋₆ Alkylenyl, X ist NRₓC(=O)O, A und B sind CH₂, n und o sind 1 oder 0 und p ist 0, wobei n+o=1, Rₓ ist H oder 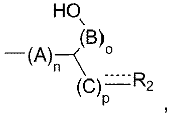 wobei A, B, C, n, o und p wie vorstehend definiert sind; und R₂ ist ein organischer Rest wie oben definiert, der wenn R_{X} H ist mit -OH substituiert ist oder einen weiteren Rest der Formel 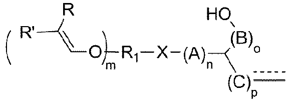 trägt wobei R₁, m, R, R', A, B, C, n, o und p wie vorstehend definiert sind.

In den vorstehend genannten Ausführungsformen ist R₂ vorzugsweise über eine Einfachbindung gebunden und kann beispielsweise ein Heteroalkylrest, insbesondere ein Alkyletherrest mit 2 bis 10 Kohlenstoffatomen sein. Geeignet sind beispielsweise Reste der Formel -CH₂-O-(CH₂)₄-O-CH₂- (für den Fall, dass R₂ zwei Alkenyletherreste der obigen Formel trägt) oder -CH₂-O-CH(CH₃)₂.

In verschiedenen Ausführungsformen der Alkenyletherpolyole der Formel (V) ist:
(1) m = 1; R und R' sind H oder R ist H und R' ist Methyl; R¹ ist -(CH₂)₁₋₁₀-O-CH₂-, insbesondere -(CH₂)₁₋₆-O-CH₂-, X ist O, A und B sind CH₂, s und t sind 1 oder 0, wobei s+t=1, und R₃ ist ein organischer Rest, der mit -OH substituiert ist oder einen weiteren Rest der Formel 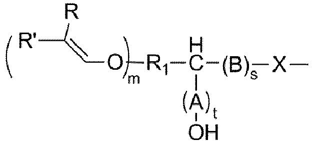 trägt wobei R₁, m, R, R', A, B, s und t wie vorstehend definiert sind; oder
(2) m = 1; R und R' sind H oder R ist H und R' ist Methyl; R¹ ist -(CH₂)₁₋₁₀-O-CH₂-, insbesondere -(CH₂)₁₋₆-O-CH₂-, X ist NR_{z}, A und B sind CH₂, s und t sind 1 oder 0, wobei s+t=1, R_{z} ist H oder 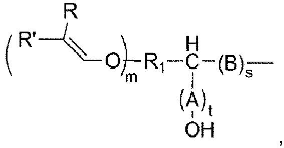 wobei A, B, m, s und t wie vorstehend definiert sind; und R₃ ist ein organischer Rest wie oben definiert, der wenn R_{z} H ist mit -OH substituiert ist oder einen weiteren Rest der Formel 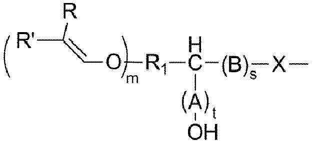 trägt wobei R₁, m, R, R', A, B, s und t wie vorstehend definiert sind; oder
(3) m = 1; R und R' sind H oder R ist H und R' ist Methyl; R₁ ist -(CH₂)₁₋₁₀-O-CH₂-, insbesondere -(CH₂)₁₋₆-O-CH₂-, X ist OC(=O)O, A und B sind CH₂, s und t sind 1 oder 0, wobei s+t=1, und R₃ ist ein organischer Rest, der mit -OH substituiert ist oder einen weiteren Rest der Formel 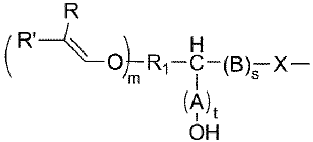 trägt wobei R₁, m, R, R', A, B, s und t wie vorstehend definiert sind; oder
(4) m = 1; R und R' sind H oder R ist H und R' ist Methyl; R₁ ist -(CH₂)₁₋₁₀-O-CH₂-, insbesondere -(CH₂)₁₋₆-O-CH₂-, X ist OC(=O)NR_{z}, A und B sind CH₂, s und t sind 1 oder 0, wobei s+t=1, R_{z} ist H oder 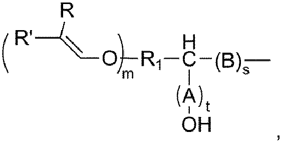 wobei A, B, m, s und t wie vorstehend definiert sind; und R₃ ist ein organischer Rest wie oben definiert, der wenn R_{z} H ist mit -OH substituiert ist oder einen weiteren Rest der Formel 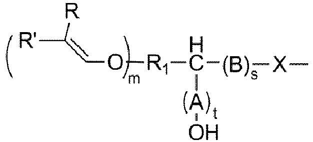 trägt wobei R₁, m, R, R', A, B, s und t wie vorstehend definiert sind.

In den vorstehend genannten Ausführungsformen der Verbindungen der Formel (V) ist R₃ beispielsweise ein Heteroalkylrest, insbesondere ein (Poly)Alkylenglykol, wie insbesondere Polypropylenglykol, oder ein C₁₋₁₀ Alkyl- oder Alkylenylrest.

Die Durchführung der einzelnen Stufen des beschriebenen Verfahrens zur Herstellung der Alkenyletherpolyole der Formel (I) oder (V) kann nach den für solche Reaktionen üblichen Methoden erfolgen. Dazu werden die Reaktionspartner, ggf. nach Aktivierung (beispielsweise Herstellung von Alkoholaten durch Umsetzen mit Natrium, miteinander in Kontakt gebracht und ggf. unter Schutzgasatmosphäre und Kontrolle der Temperatur umgesetzt.

Die derart hergestellten Alkenyletherpolyole sind Vorstufen für die folgende Synthese von strahlenhärtbaren Polyurethanen durch Umsetzung mit einem Polyisocyanat. Die Alkenyletherpolyole, insbesondere die Vinyletherpolyole, die hierin beschrieben werden, können beispielsweise zusätzlich oder als Alternative zu bekannten Polyolen für die Synthese von Polyurethanen eingesetzt werden.

Bekannte Polyole, die für die PU Synthese verwendet werden, schließen beispielsweise Polyether- und Polyesterpolyole ein, sind aber nicht darauf beschränkt. Für die Polyurethansynthese werden die Polyole oder Gemische von Polyolen, die die beschriebenen Alkenyletherpolyole enthalten, mit Polyisocyanaten im molaren Überschuss umgesetzt. Die Reaktion erfolgt hierbei unter an sich bekannten Bedingungen, d.h. bei erhöhter Temperatur und ggf. in Gegenwart eines Katalysators. Abhängig von der Menge an eingesetztem Alkenyletherpolyol weisen die erhaltenen Polyurethan(prä)polymere die gewünschte Dichte an quervernetzbaren Alkenylethergruppen auf.

In verschiedenen Ausführungsformen wird daher zusätzlich zu dem mindestens einen Alkenyletherpolyol mindestens ein weiteres Polyol eingesetzt, das nicht mit Alkenylethergruppen funktionalisiert ist. Dabei eignen sich alle für die PU Synthese bekannten Polyole, beispielsweise monomere Polyole, Polyesterpolyole, Polyetherpolyole, Polyesteretherpolyole, Polycarbonatpolyole, hydroxyfunktionelle Polysiloxane, insbesondere Polydimethylsiloxane, wie z.B. Tegomer® H-Si 2315 (Evonik, DE) oder Mischungen von zwei oder mehr der genannten.

Polyetherpolyole können aus einer Vielzahl von Alkoholen hergestellt werden, die eine oder mehrere, primäre oder sekundäre Alkoholgruppen enthalten. Als Starter für die Herstellung der keine tertiären Aminogruppen enthaltenden Polyether können beispielsweise folgende Verbindungen oder Mischungen dieser Verbindungen eingesetzt werden: Wasser, Ethylenglykol, Propylenglykol, Glycerin, Butandiol, Butantriol, Trimethylolethan, Pentaerythrit, Hexandiol, 3-Hydroxyphenol, Hexantriol, Trimethylolpropan, Oktandiol, Neopentylglykol, 1,4-Hydroxymethylcyclohexan, Bis(4-hydroxyphenyl)dimethylmethan und Sorbit. Bevorzugt werden Ethylenglykol, Propylenglykol, Glycerin und Trimethylolpropan eingesetzt, besonders bevorzugt Ethylenglykol und Propylenglykol, und in einer besonders bevorzugten Ausführungsform wird Propylenglykol eingesetzt.

Als cyclische Ether zur Herstellung von vorstehend beschriebenen Polyethern kommen Alkylenoxide wie Ethylenoxid, Propylenoxid, Butylenoxid, Epichlorhydrin, Styroloxid oder Tetrahydrofuran oder Gemische aus diesen Alkylenoxiden in Betracht. Bevorzugt werden Propylenoxid, Ethylenoxid oder Tetrahydrofuran oder Gemische aus diesen verwendet. Besonders bevorzugt wird Propylenoxid oder Ethylenoxid oder Gemische aus diesen verwendet. Ganz besonders bevorzugt wird Propylenoxid verwendet.

Polyesterpolyole können beispielsweise durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton hergestellt werden. Ebenfalls als polyfunktionelle Alkohole zur Herstellung von Polyesterpolyolen geeignet sind 1,4-Hydroxymethylcyclohexan, 2-Methyl-1,3-propandiol, 1,2,4-Butantriol, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren oder Tricarbonsäuren oder Gemischen aus Dicarbonsäuren oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignete Alkohole sind Hexandiol, Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische. Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von ε-Caprolacton, auch "Polycaprolactone" genannt, oder Hydroxycarbonsäuren, beispielsweise ω-Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Polycarbonatpolyole können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen dieser Diole mit Diarylcarbonaten, beispielsweise Diphenylcarbonaten, oder Phosgen, erhalten werden.

Geeignete Polyisocyanate sind aliphatische, aromatische und/oder alicyclische Isocyanate mit zwei oder mehr, bevorzugt zwei bis höchstens etwa vier, Isocyanatgruppen. Besonders bevorzugt werden im Rahmen der vorliegenden Erfindung monomere Polyisocyanate, insbesondere monomere Diisocyanate, eingesetzt. Beispiele für geeignete monomere Polyisocyanate sind: 1,5-Naphthylendiisocyanat, 2,2'-, 2,4'- und/oder 4,4'-Diphenylmethandiisocyanat (MDI), hydriertes MDI (H12MDI), Allophanate des MDI, Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanato-ethylester, ferner Diisocyanate mit reaktionsfähigen Halogenatomen, wie 1-Chlormethylphenyl-2,4-diisocyanat, 1-Brommethylphenyl-2,6-diisocyanat-3,3-Bis-chlormethylether-4,4'-diphenyldiisocyanat oder schwefelhaltige Polyisocyanate. Schwefelhaltige Polyisocyanate erhält man beispielsweise durch Umsetzung von 2 mol Hexamethylendiisocyanat mit 1 mol Thiodiglykol oder Dihydroxydihexylsulfid.

Weitere einsetzbare Diisocyanate sind beispielsweise Trimethylhexamethylendiisocyanat, 1,4-Diisocyanatobutan, 1,12-Diisocyanatododecan und Dimerfettsäurediisocyanat. Besonders geeignet sind: Tetramethylen-, Hexamethylen-, Undecan-, Dodecamethylen-, 2,2,4-Trimethylhexan-, 2,3,3-Trimethyl-hexamethylen, 1,3-Cyclohexan-, 1,4-Cyclohexan-, 1,3- bzw. 1,4-Tetramethylxylol-, Isophoron-, 4,4-Dicyclohexylmethan- und Lysinesterdiisocyanat.

Als mindestens trifunktionelle Isocyanate geeignet sind Polyisocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen.

Zur Herstellung von Trimeren geeignete Isocyanate sind die bereits oben genannten Diisocyanate, wobei die Trimerisierungsprodukte der Isocyanate HDI, MDI, TDI oder IPDI besonders bevorzugt sind.

Weiterhin sind als Triisocyanate auch Addukte aus Diisocyanaten und niedermolekularen Triolen geeignet, insbesondere die Addukte aus aromatischen Diisocyanaten und Triolen wie zum Beispiel Trimethylolpropan oder Glycerin. Ebenfalls zum Einsatz geeignet sind die polymeren Isocyanate, wie sie beispielsweise als Rückstand im Destillationssumpf bei der Destillation von Diisocyanaten anfallen. Besonders geeignet ist hierbei das polymere MDI, wie es bei der Destillation von MDI aus dem Destillationsrückstand erhältlich ist.

Der stöchiometrische Überschuss von Polyisocyanat bei der Synthese der Polyurethane beträgt bezogen auf das molare Verhältnis von NCO- zu OH-Gruppen insbesondere 1:1 bis 1,8:1, vorzugsweise 1:1 bis 1,6:1 und besonders bevorzugt 1,05:1 bis 1,5:1.

Die entsprechenden Polyurethane weisen üblicherweise einen NCO-Gehalt von 5-20 Gew.-%, vorzugsweise 9 bis 19, noch bevorzugter 13-18, am bevorzugtesten 12-17 Gew.-% auf und haben eine nominelle mittlere NCO-Funktionalität von 2 bis 3, vorzugsweise 2 bis 2,7, bevorzugter 2 bis 2,4, am bevorzugtesten 2 bis 2,1.

Das Molekulargewicht (Mn) der Polyurethane liegt üblicherweise im Bereich von 1.500 g/mol bis 100.000 g/mol, insbesondere bevorzugt von 2.000 g/mol bis 50.000 g/mol.

Die Herstellung der NCO-terminierten Polyurethane ist dem Fachmann an sich bekannt und erfolgt beispielsweise derart, dass die bei Reaktionstemperaturen flüssigen Polyole mit einem Überschuss der Polyisocyanate vermischt werden und die resultierende Mischung bis zum Erhalt eines konstanten NCO-Wertes gerührt wird. Als Reaktionstemperatur werden Temperaturen im Bereich von 40°C bis 180°C, vorzugsweise 50°C bis 140°C gewählt.

Durch die Möglichkeit die Alkenyletherpolyole mit anderen Polyolen zu kombinieren, kann eine kontrollierte Synthese von Polymeren mit einem festgelegten Anteil an strahlungs-härtbaren Alkenylethergruppen erfolgen.

Die so erhältlichen NCO-terminierten Polyurethane mit Alkenylethergruppen-haltigen Seitenketten sind bereits als solche für den zweistufigen Härtungsprozess aus kationischer Vernetzung der Alkenylethergruppen und feuchtigkeitsabhängiger Polykondensation der NCO-Gruppen einsetzbar.

In verschiedenen Ausführungsformen werden sie aber in einem weiteren Schritt mit Silanen endgruppenverkappt. Dazu werden die NCO-terminierten Polyurethane mit einem Silan, das zusätzlich eine NCO-reaktive Gruppe enthält, wie zum Beispiel eine Amino- oder Hydroxylgruppe, umgesetzt. Das Silan kann ein Silan der Formel X-[(CH₂)ₚ-Si(R¹)_{3-q}(OR²)_{q}]ᵣ, sein, wobei p, q und r jeweils unabhängig für eine ganze Zahl von 1 bis 3 stehen, jedes R¹ unabhängig für C₁₋₄ Alkyl oder -(CH₂)ₚ-Si(R¹)_{3-q}(OR²)_{q} und jedes R² unabhängig für C₁₋₄ Alkyl, vorzugsweise Methyl oder Ethyl, steht. X steht dabei für eine NCO-reaktive Gruppe, wie beispielsweise eine Amino-, Hydroxyl-, Carboxyl- oder Thiolgruppe, wobei Amino- und Hydroxylgruppen, insbesondere aber Aminogruppen besonders bevorzugt sind. Dadurch ergeben sich dann beispielsweise über eine Urethangruppe (-N-C(O)-O, wenn X = Hydroxyl)) oder eine Ureagruppe (-N-C(O)-N, wenn X = Amino) an die Polyurethane gekoppelte Silanendgruppen.

Die Endgruppenverkappung kann stöchiometrisch mit einem molaren Überschuss an Silan bezogen auf NCO-Gruppen oder auch nur teilweise mit einem molaren Unterschuss an Silan bezogen auf NCO-Gruppen erfolgen. In letzterem Fall ergeben sich Polymere, die neben Silanendgruppen auch terminale NCO-Gruppen aufweisen.

Die Erfindung betrifft daher in verschiedenen Ausführungsformen Polyurethane mit Alkenylethergruppen-haltigen Seitenketten und Silanendgruppen. Die Silanendgruppen sind dabei insbesondere solche -[(CH₂)ₚ-Si(R¹)_{3-q}(OR²)_{q}]ᵣ mit p, q und r = 1, 2 oder 3, R¹ = C₁₋₄ Alkyl oder -(CH₂)ₚ-Si(R¹)_{3-q}(OR²)_{q} und R² = C₁₋₄ Alkyl. Dabei sind die Polyurethane erhältlich durch das Umsetzen mindestens eines Alkenyletherpolyols enthaltend mindestens eine Alkenylethergruppe, insbesondere eine 1-Alkenylethergruppe, und mindestens zwei Hydroxylgruppen (-OH), mit mindestens einem Polyisocyanat enthaltend mindestens zwei Isocyanatgruppen (-NCO), wobei das Polyisocyanat bezogen auf die Isocyanatgruppen relativ zu den Hydroxylgruppen im molarem Überschuß eingesetzt wird um ein NCO-terminiertes Polyurethan zu erhalten, und das anschließende Umsetzen des NCO-terminierten Polyurethans mit einem Silan, insbesondere einem Silan der Formel X-[(CH₂)ₚ-Si(R¹)_{3-q}(OR²)_{q}]ᵣ, wobei X eine NCO-reaktive Gruppe ist, vorzugsweise eine Amino- oder Hydroxylgruppe, insbesondere eine Aminogruppe (-NH₂). Die so erhältlichen Polyurethane haben Alkenyletherseitenketten, vorzugsweise Vinyletherseitenketten, und sind Silan-terminiert. Abhängig von der Stöchiometrie der zur Endgruppenverkappung eingesetzten Silane können die so erhältlichen Polyurethane auch Silan- und NCO-Endgruppen aufweisen, wie oben beschrieben.

In verschiedenen Ausführungsformen der Erfindung wird R¹ in den Silangruppen derart gewählt, dass die Endgruppe 1-10 Siliziumatome enthält, vorzugsweise 1-3 Siliziumatome, noch bevorzugter 1-2 Siliziumatome, am bevorzugtesten nur 1 Siliziumatom. In verschiedenen Ausführungsformen enthalten die reaktiven Silane keine tertiären Aminogruppen. Es ist ferner bevorzugt die Silane, die zur Endgruppenverkappung eingesetzt werden, nicht im Überschuss bezogen auf die NCO-Gruppen einzusetzen.

Ebenfalls erfasst werden Zusammensetzungen, wie beispielsweise Klebstoffe, Dichtstoffe und Beschichtungszusammensetzungen, die solche Polyurethane enthalten.

Die mittels der hierin beschriebenen Verfahren erhältlichen strahlen- und feuchtigkeitshärtbaren Polyurethane, die entweder NCO- oder Silanendgruppen aufweisen, können dann bei der Anwendung in einem ersten Schritt mittels eines kationischen Polymerisationsmechanismus mit Strahlung vernetzt (gehärtet) werden, wobei die Härtung innerhalb kurzer Zeit, typischerweise innerhalb weniger Sekunden, erfolgt. In einem zweiten Schritt erfolgt dann die weitere Härtung über einen feuchtigkeitsabhängigen Härtungsmechanismus, wobei die für die Reaktion erforderlichen Wassermoleküle vorzugsweise aus der Umgebungsluftfeuchtigkeit oder auch aus bewusst angefeuchteter Luft stammen. Alternativ können die Wassermoleküle auch durch Kontakt mit Wasser, beispielsweise Eintauchen in Wasser bereitgestellt werden. Dieser zweite Härtungsschritt verläuft typischerweise über einen Zeitraum von mehreren Stunden, ggf. sogar Tagen. Diese zweifache Härtung mittels zweier unabhängiger Härtungsmechanismen wirkt synergistisch zusammen und ist insbesondere für Anwendungen geeignet, in denen die feuchtigkeitsabhängige Härtung nicht ausreicht, da die schnelle Härtung mittels Bestrahlung schnelle Viskositätsanstiege für eine schnelle, anfängliche Vergelung (tan δ wird <1 bei rheologischen Oszillationsmessungen bei 60 °C, einer Deformation von 0,1 %, einer Frequenz von 10 Hz und einem Anfangsspalt von 0,3 mm mit einer angewandten Normalkraft von Fn = 0 N) oder Verfestigung, hohe Anfangsfestigkeit und optional eine klebefreie Handhabung vor der Härtung ermöglicht. Es ist daher möglich Materialien mit einer niedrigen Anfangsviskosität zu verwenden, die sich durch Bestrahlung sehr schnell in hochviskose Materialien umwandeln lassen, die nicht zum Verfließen neigen und daher ein einfaches Zusammenfügen von Teilen ermöglichen. Bevorzugte Startviskositäten für solche Systeme (komplexe Viskosität bei 20°C) liegen im Bereich von <100.000 mPas, bevorzugt <10.000 mPas, besonders bevorzugt <2.000 mPas, am meisten bevorzugt <200 mPas. Die Viskositäten werden hierbei mittels rheologischen Oszillationsmessungen bei 60 °C, einer Deformation von 0,1 %, einer Frequenz von 10 Hz und einem Anfangsspalt von 0,3 mm mit einer angewandten Normalkraft von Fn = 0 N bestimmt.

Ein weiterer Vorteil ist, dass die feuchtigkeitshärtenden Gruppen auch mit einer Reihe von Substraten/Grenzflächen reagieren können, wie beispielsweise Glas- oder Metalloberflächen und dadurch die Adhäsion von Klebstoffen, Beschichtungen und Dichtstoffen vorteilhaft beeinflussen.

Der kationische Härtungsmechanismus ist ferner unempfindlich gegenüber Sauerstoff und liefert darkcure Eigenschaften, d.h. die Polymerisation schreitet nach der Initiation selbstständig fort. Die Isocyanatfunktionalität liefert zusätzlich Reaktionsmedien, die frei von nukleophilen Molekülen und Wasser sind und überwindet dadurch die Nachteile, die durch die Empfindlichkeit des kationischen Reaktionsmechanismus gegenüber Nukleophilen entstehen. Dadurch werden die hohe Reaktivität der Alkenylether und ein effizienter, unempfindlicherer Initiationsprozess ermöglicht. Es kann daher in verschiedenen Ausführungsformen in denen Silan-verkappte Polyurethane eingesetzt/erhalten werden, vorteilhaft sein, die Silane im Unterschuss einzusetzen, um einen Teil der NCO-Funktionalitäten für diesen Zweck zu erhalten.

Die Erfindung betrifft daher in einem Aspekt auch ein Verfahren zum Vernetzen oder Härten eines Alkenylethergruppen-haltigen Polyurethanpolymers mit feuchtigkeitsreaktiven Endgruppen, wobei die feuchtigkeitsreaktiven Endgruppen Isocyanatgruppen (-NCO) oder Silangruppen der Formel -(CH₂)ₚ-Si(R¹)_{3-q}(OR²)_{q} mit p und q = 1, 2 oder 3 und R¹ und R² = C₁₋₄ Alkyl sind, wobei das Polyurethan erhältlich ist durch das Umsetzen mindestens eines Alkenyletherpolyols enthaltend mindestens eine Alkenylethergruppe, insbesondere eine 1-Alkenylethergruppe, und mindestens zwei Hydroxylgruppen (-OH), mit mindestens einem Polyisocyanat enthaltend mindestens zwei Isocyanatgruppen (-NCO), wobei das Polyisocyanat bezogen auf die Isocyanatgruppen relativ zu den Hydroxylgruppen im molarem Überschuß eingesetzt wird um ein NCO-terminiertes Polyurethan zu erhalten, und optional das anschließende Umsetzen des NCO-terminierten Polyurethans mit einem Silan der Formel X-(CH₂)ₚ-Si(R¹)_{3-q}(OR²)_{q}, wobei X eine NCO-reaktive Gruppe ist, wobei in einem ersten Schritt die Alkenylethergruppen durch UV-Exposition kationisch vernetzt werden und in einem zweiten Schritt die feuchtigkeitsreaktiven Gruppen feuchtigkeitsabhängig polymerisiert werden.

Generell sind für die strahlungsabhängige Härtungsreaktion alle im Stand der Technik bekannten Photoinitiatoren geeignet. Diese können optional auch in Kombination mit bekannten Sensitizern eingesetzt werden. Ein Überblick über geeignete Initiatoren, insbesondere lodonium- und Sulfoniumbasierte Verbindungen, besonders solche mit Anionen, die ausgewählt werden aus Hexafluorophosphate (PF₆⁻), Tetrafluoroborat (BF₄⁻) und Hexafluoroantimonat (SbF₆⁻), findet sich beispielsweise in Sangermano et al. (Macromol. Mater. Eng. 2014, 299, 775-793).

Anwendungsfelder für die beschriebenen Polyurethane sind insbesondere Klebstoff-, Dichtstoff- und Beschichtungsanwendungen sowie additive Herstellungsverfahren/-techniken, wie z.B. 3D-Drucktechniken. Dabei können die Polyurethane in Form von Zusammensetzungen eingesetzt werden, die zusätzlich einen oder mehrere der im Stand der Technik üblichen Bestandteile solcher Zusammensetzungen enthalten.

Die Erfindung betrifft schließlich auch Produkte, die die hierin beschriebenen Polyurethane, auch in ausgehärtetem Zustand, enthalten, wie beispielsweise mit entsprechenden Klebstoffen oder Beschichtungen verklebte, abgedichtete oder beschichtete Formteile.

Die Erfindung wird im Folgenden anhand von Beispielen weiter veranschaulicht, wobei diese nicht als Einschränkung verstanden werden sollten.

### Beispiele

### Verwendete Materialien:

4-Hydroxybutylvinylether (HBVE) (BASF, 99% stabilisiert mit 0,01 % KOH) wurde über Molekularsieb 4 Å gelagert. Natrium (Merck, 99%) wurde in trockenem Diethylether gewaschen und in Stücke geschnitten. Die oxidierte Oberfläche wurde unter Stickstoffatmosphäre vor Verwendung abgeschnitten. 4,4'-Dimethyl-diphenyliodoniumhexafluorophosphat (Omnicat 440, IGM, 98%) wurde gesiebt. 1,4-Butandioldiglycidylether (BDDGE, Sigma-Aldrich, 95 %), Polypropylenglykol (PPG) (Dow Chemical, Voranol 2000 L, 2000 g/mol), Hexamethylendiisocyanat (HDI, Acros Organics, 99%) und Dimethylzinndineodecanoat (Momentive, Fomrez catalyst UL-28) wurden wie erhalten verwendet.

### Beispiel 1: Synthese des Vinyletherpolyols (VEOH)

139,51 g (1,2 mol) HBVE wurden in einem 250 ml Rundkolben vorgelegt. Ein Tropftrichter mit Druckausgleich wurde angeschlossen und darin 24,78 g (0,12 mol) BDDGE vorgelegt. Die gesamte Apparatur wurde im Vakuum getrocknet und mit Stickstoff geflutet. 7,00 g (0,3 mol) Natrium wurden zugefügt. Nachdem das Natrium vollständig aufgelöst war, wurde BDDGE langsam zugegeben. Die Temperatur wurde so kontrolliert, dass sie 50 °C nicht überschritt. Nach vollständiger Zugabe von BDDGE wurde bei 50 °C über einen Zeitraum von 30 min gerührt. 50 ml Wasser wurden zugegeben, um das verbliebene Alkoholat zu hydrolysieren. Das Produkt wurde mehrere Male mit gesättigter Natriumchlorid-Lösung und Wasser gewaschen und im Vakuum aufkonzentriert, um gegebenenfalls Edukt- und Wasserrückstände zu entfernen. Ausbeute: 76 %. ¹H-NMR (CDCl₃), xy MHz): δ (pp) = 1,6-1,8 (12 H, mid-CH₂ Butyl), 2,69 (2 H, OH, H/D austauschbar), 3,4-3,55 (16 H, CH₂-O-CH₂), 3,70 (4 H, CH₂-O-vinyl), 3,94 (2 H, CH-O), 3,98 (1 H, CH₂=CH-O trans), 4,17 (1 H, CH₂=CH-O cis), 6,46 (1 H, CH₂=CH-O gemi).

### Beispiel 2: Synthese von Vinylether-funktionalisiertem Polyurethan

1,96 g (4,5 mmol) des in Beispiel 1 synthetisierten Vinyletherpolyols und 18,00 g (9 mmol) Polypropylenglykol wurden in einen 50 ml Kolben gegeben, unter reduziertem Druck bei 75°C entgast und mit Stickstoff gespült. Bei 15°C wurden dann 3,05 g (18.1 mmol) HDI und 0,0127 g Dimethylzinndineodecanoat zugegeben und die Mischung langsam auf 80°C erwärmt. Der Fortschritt der Reaktion wurde mittels IR Spektroskopie kontrolliert bis der gewünschte NCO-Wert erreicht war.

Die Reaktion erfolgte nach folgendem Reaktionsschema:

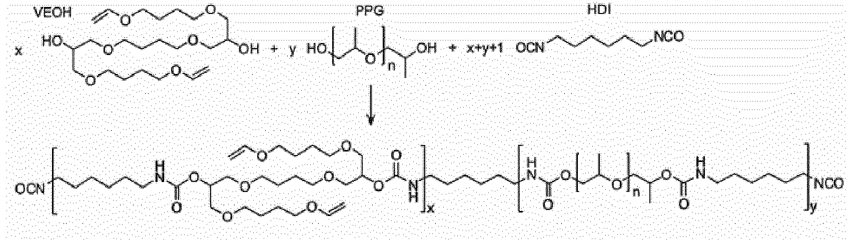

### Beispiel 3: Härtung von Vinylether-funktionalisiertem Polyurethan

Die Härtung erfolgte wie folgt: Zu dem Polyurethan aus Beispiel 2 wurden 0,23 g 4,4'-Dimethyl-diphenyliodoniumhexafluorophosphat bei 40°C unter starkem Rühren zugegeben. Gelöste Gase wurden unter reduziertem Druck entfernt und ein kleines Glasgefäß wurde bis zum Rand mit der Probe gefüllt und dicht verschlossen. Die Formulierung wurde dann UV- und NIR-gekoppelten Rheologieuntersuchungen in einem Anton Paar MCR 302 Rheometer das mit einem Bruker MPA FT-NIR Spektrometer und einer Omnicure S2000SC Lichtquelle, die beide mittels der Rheometer-Software ausgelöst wurden, gekoppelt war, unterzogen. Dazu wurde die Probe in die Mitte der Quarzbodenplatte gegeben und eine Aluminiumplatte mit 25 mm Durchmesser wurde als mobile Deckplatte mit einem Anfangsspalt von 0,3 mm verwendet. Ein Normalkraft von 0 wurde für die automatische Spaltkontrolle bei Schrumpfung der Probe angewendet um zusätzliche Spannung oder Delaminierung zu vermeiden. Ein ansteigendes Messprofil wurde angewendet, um lineares viskoelastisches Verhalten sicherzustellen und innerhalb der Instrumentenbeschränkungen zu bleiben, da die Module der Probe bei Härtung um mehrere Größenordnungen ansteigen. Oszillationsmessungen wurden bei einer Deformation von 0,1 %, einer Frequenz von 10 Hz und einem Anfangsspalt von 0,3 mm mit einer angewandten Normalkraft von Fn = 0 N durchgeführt. Die Messzelle wurde mit Instrumentenluft (Wassergehalt = 1.1 mg/m³) gespült und auf 60 °C temperiert. Mechanische Daten wurde vor der Bestrahlung alle 5s aufgenommen und jede Sekunde bei und nach Bestrahlung. NIR Spektren wurden mit einer Rate von etwa 2 Spektren pro Sekunde aufgenommen. Die Lichtquelle wurde automatisch nach 30s für 50s angeschaltet (189 mW cm⁻² UVA-C). Nach 1800 s (30 min) wurde die Messzelle geöffnet und das Spülen mit Instrumentenluft gestoppt, um Feuchtigkeitsdiffusion zu erlauben. Mechanische Daten wurde alle 60 s und NIR Spektren alle 15 min für weitere 120 h aufgenommen.

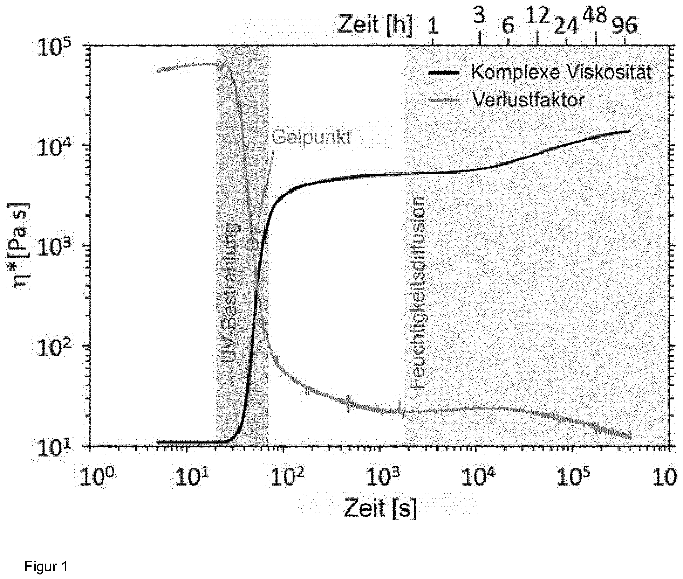

**Figur 1** zeigt die komplexe Viskosität und den Verlustfaktor der Probe über die Zeit, wobei die Zeitskala logarithmisch dargestellt ist, um zu zeigen, dass während die kationische Polymerisation innerhalb von Sekunden erfolgt, die Feuchtigkeitshärtung über Stunden oder sogar mehrere Tage erfolgt. Die kationische Härtung erhöht die komplexe Viskosität um mehr als zwei Größenordnungen und induziert die Vergelung der Probe, was durch den Verlustfaktor (tan (δ) = 1 Sol-Gel-Übergang) angezeigt wird. Das Plateau der Viskositätskurve zeigt den Abschluss dieser Reaktion an, wobei der folgende langsame Anstieg durch die Diffusion von Feuchtigkeit in die Probe und die resultierende Härtung der Isocyanatgruppen verursacht wird.

## Patentansprüche

1. Verfahren zum Vernetzen oder Härten eines Alkenylethergruppen-haltigen Polyurethanpolymers mit feuchtigkeitsreaktiven Endgruppen, wobei die feuchtigkeitsreaktiven Endgruppen Isocyanatgruppen (-NCO) oder Silangruppen der Formel -[(CH₂)ₚ-Si(R¹)_{3-q}(OR²)_{q}]ᵣ mit p, q und r = 1, 2 oder 3, R¹ = C₁₋₄ Alkyl oder -(CH₂)ₚ-Si(R¹)_{3-q}(OR²)_{q} und R² = C₁₋₄ Alkyl, wobei das Polyurethan erhältlich ist durch das Umsetzen mindestens eines Alkenyletherpolyols enthaltend mindestens eine Alkenylethergruppe, insbesondere eine 1-Alkenylethergruppe, und mindestens zwei Hydroxylgruppen (-OH), mit mindestens einem Polyisocyanat enthaltend mindestens zwei Isocyanatgruppen (-NCO), wobei das Polyisocyanat bezogen auf die Isocyanatgruppen relativ zu den Hydroxylgruppen im molarem Überschuß eingesetzt wird um ein NCO-terminiertes Polyurethan zu erhalten, und optional das anschließende Umsetzen des NCO-terminierten Polyurethans mit einem Silan, insbesondere mit einem Silan der Formel X-[(CH₂)ₚ-Si(R¹)_{3-q}(OR²)_{q}]ᵣ, wobei X eine NCO-reaktive Gruppe ist, wobei in einem ersten Schritt die Alkenylethergruppen durch Exposition gegenüber Strahlung kationisch vernetzt werden und in einem zweiten Schritt die feuchtigkeitsreaktiven Gruppen feuchtigkeitsabhängig polymerisiert werden.

2. Polyurethanpolymer mit Alkenylethergruppen-haltigen Seitenketten und siliziumhaltigen Endgruppen der Formel -[(CH₂)ₚ-Si(R¹)₃-_{q}(OR²)_{q}]ᵣ mit p, q und r = 1, 2 oder 3, R¹ = C₁₋₄ Alkyl oder -(CH₂)ₚ-Si(R¹)_{3-q}(OR²)_{q} und R² = C₁₋₄ Alkyl, wobei das Polyurethan erhältlich ist durch das Umsetzen mindestens eines Alkenyletherpolyols enthaltend mindestens eine Alkenylethergruppe, insbesondere eine 1-Alkenylethergruppe, und mindestens zwei Hydroxylgruppen (-OH), mit mindestens einem Polyisocyanat enthaltend mindestens zwei Isocyanatgruppen (-NCO), wobei das Polyisocyanat bezogen auf die Isocyanatgruppen relativ zu den Hydroxylgruppen im molarem Überschuß eingesetzt wird um ein NCO-terminiertes Polyurethan zu erhalten, und das anschließende Umsetzen des NCO-terminierten Polyurethans mit einem Silan, insbesondere einem Silan der Formel X-[(CH₂)ₚ-Si(R¹)_{3-q}(OR²)_{q}]ᵣ, wobei X eine NCO-reaktive Gruppe ist, vorzugsweise eine Amino- oder Hydroxylgruppe, insbesondere eine Aminogruppe.

3. Verfahren nach Anspruch 1 oder Polyurethanpolymer nach Anspruch 2, **dadurch gekennzeichnet, dass** das mindestens eine Alkenyletherpolyol erhältlich ist durch
A) Umsetzen eines Alkenylethers, enthaltend mindestens eine Alkenylethergruppe und mindestens eine funktionelle Gruppe ausgewählt aus -OH, -COOH, -SH, -NH₂ und deren Derivaten, mit (i) einem Epoxid oder (ii) einem cyclischen Carbonat oder Derivat davon; oder
B) Umsetzen eines Alkenylethers, enthaltend mindestens eine Alkenylethergruppe und mindestens eine funktionelle Gruppe ausgewählt aus (i) Epoxidgruppen und (ii) cyclischen Carbonatgruppen oder Derivaten davon, mit einem Alkohol, Thiol, einer Carbonsäure oder einem Amin oder Derivaten der vorgenannten.

4. Verfahren oder Polyurethanpolymer nach Anspruch 3, wobei das Alkenyletherpolyol erhältlich ist durch Umsetzen eines Alkenylethers, enthaltend mindestens eine Alkenylethergruppe und mindestens eine funktionelle Gruppe ausgewählt aus -OH, -COOH, -SH, -NH₂ und deren Derivaten, mit (i) einem Epoxid oder (ii) einem cyclischen Carbonat oder Derivat davon, **dadurch gekennzeichnet, dass** das Alkenyletherpolyol ein Alkenyletherpolyol der Formel (I) ist 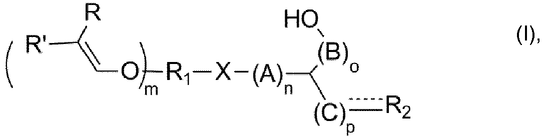 wobei
R₁ ein mindestens 2-wertiger organischer Rest ist, insbesondere ein mindestens 2-wertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom,
R₂ ein organischer Rest ist, optional mit mindestens einer -OH Gruppe und/oder 1 bis 1000 Kohlenstoffatomen, insbesondere ein optional 2- oder mehrwertiges, lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom,
X O, S, C(=O)O, OC(=O)O, C(=O)OC(=O)O, NRₓ, NRₓC(=O)O, NRₓC(=O)NRₓ oder OC(=O)NRₓ ist,
jedes R und R' unabhängig ausgewählt ist aus H, C₁₋₂₀ Alkyl und C₂₋₂₀ Alkenyl, wobei insbesondere eines von R und R' H und das andere C₁₋₄ Alkyl oder beide H sind,
jedes A, B und C unabhängig ausgewählt ist aus CR"R"',
R" und R'" unabhängig ausgewählt sind aus H, einer funktionellen Gruppe, und einem organischen Rest, insbesondere H und C₁₋₂₀ Alkyl, oder R" und R'" gemeinsam oder mit dem Kohlenstoffatom an welches sie gebunden sind ein organischer Rest sind, oder zwei von R" und R'" die an benachbarte Kohlenstoffatome gebunden sind, zusammen eine Bindung bilden um eine Doppelbindung zwischen den benachbarten Kohlenstoffatomen auszubilden,
------ eine Einfach- oder Doppelbindung ist, wobei wenn es eine Doppelbindung ist,
das Kohlenstoffatom, das an R₂ gebunden ist nur einen Substituenten R" oder R'" trägt,
m eine ganze Zahl von 1 bis 10, vorzugsweise 1, ist,
n, p und o jeweils 0 oder eine ganze Zahl von 1 bis 10 sind, wobei n+p+o=1 oder mehr ist, insbesondere 1 oder 2, und
Rₓ H, ein organischer Rest oder 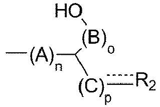 ist, wobei wenn Rₓ nicht 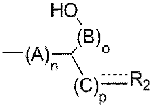 ist, R₂ mindestens einen Substituenten aufweist, der ausgewählt ist aus -OH und

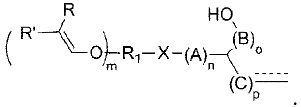

5. Verfahren oder Polyurethanpolymer nach Anspruch 3, wobei das Alkenyletherpolyol erhältlich ist durch Umsetzen eines Alkenylethers, enthaltend mindestens eine Alkenylethergruppe und mindestens eine funktionelle Gruppe ausgewählt aus (i) Epoxidgruppen und (ii) cyclischen Carbonatgruppen oder Derivaten davon, mit einem Alkohol, Thiol, einer Carbonsäure oder einem Amin oder Derivaten der vorgenannten, **dadurch gekennzeichnet, dass** das Alkenyletherpolyol ein Alkenyletherpolyol der Formel (V) ist 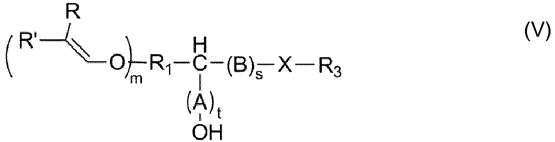 wobei
R₁ ein mindestens 2-wertiger organischer Rest ist, insbesondere ein mindestens 2-wertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom,
R₃ ein organischer Rest ist, optional mit 1 bis 1000 Kohlenstoffatomen, insbesondere ein optional 2- oder mehrwertiges, lineares oder verzweigtes, substituiertes oder unsubstituiertes Alkyl mit 1 bis 20 Kohlenstoffatomen, lineares oder verzweigtes, substituiertes oder unsubstituiertes Heteroalkyl mit 1 bis 20 Kohlenstoffatomen und mindestens einem Sauerstoff- oder Stickstoffatom, oder ein (Poly)Alkylenglykolrest der Formel -O-[CHRₐCH₂O]_{b}-R_{b} ist, wobei Rₐ H oder ein C₁₋₄-Alkylrest, R_{b} H oder 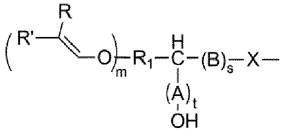 und b 1 bis 100 ist;
X O, S, OC(=O), OC(=O)O, OC(=O)OC(=O), NR_{z}, NR_{z}C(=O)O, NR_{z}C(=O)NR_{z} oder OC(=O)NR_{z} ist,
jedes R und R' unabhängig ausgewählt ist aus H, C₁₋₂₀ Alkyl und C₂₋₂₀ Alkenyl, wobei insbesondere eines von R und R' H und das andere C₁₋₄ Alkyl oder beide H sind,
jedes A und B unabhängig ausgewählt ist aus CR"R"',
R" und R'" unabhängig ausgewählt sind aus H, einer funktionellen Gruppe, und einem organischen Rest, insbesondere H und C₁₋₂₀ Alkyl, oder R" und R'" gemeinsam oder mit dem Kohlenstoffatom an welches sie gebunden sind ein organischer Rest sind, oder zwei von R" und R'" die an benachbarte Kohlenstoffatome gebunden sind, zusammen eine Bindung bilden um eine Doppelbindung zwischen den benachbarten Kohlenstoffatomen auszubilden,
m eine ganze Zahl von 1 bis 10, vorzugsweise 1, ist,
s und t jeweils 0 oder eine ganze Zahl von 1 bis 10 sind, wobei s+t=1 oder mehr ist, insbesondere 1 oder 2, und
R_{z} H, ein organischer Rest oder 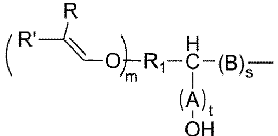 ist, wobei wenn R_{z} nicht 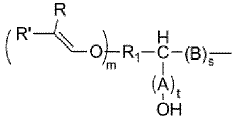 ist,
R₃ mindestens einen Substituenten aufweist, der ausgewählt ist aus -OH und

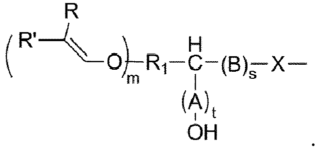

6. Verfahren oder Polyurethanpolymer nach einem der Ansprüche 1 bis 5, **dadurch gekennzeichnet, dass** die Alkenylethergruppen Vinylethergruppen sind.

7. Verfahren oder Polyurethanpolymer nach einem der Ansprüche 1 bis 6, **dadurch gekennzeichnet, dass** das NCO-terminierte, Alkenylethergruppen-haltige Polyurethanpolymer, erhältlich ist durch das Umsetzen mindestens eines Alkenyletherpolyols enthaltend mindestens eine Alkenylethergruppe, insbesondere eine 1-Alkenylethergruppe, und mindestens zwei Hydroxylgruppen (-OH), sowie mindestens eines weiteren Polyols, insbesondere eines Polyetherpolyols, mit mindestens einem Polyisocyanat enthaltend mindestens zwei Isocyanatgruppen.

8. Verfahren oder Polyurethanpolymer nach einem der Ansprüche 1 bis 7, **dadurch gekennzeichnet, dass** der Schritt der Vernetzung der Alkenylethergruppen in Gegenwart eines Photoinitiators erfolgt.

9. Gehärtetes oder vernetztes Polyurethan erhältlich mittels des Verfahrens nach einem der Ansprüche 1 und 3-8.

10. Zusammensetzung, insbesondere Klebstoff-, Dichtstoff- oder Beschichtungsmittelzusammensetzung, enthaltend mindestens ein Polyurethanpolymer gemäß Anspruch 2.

11. Verwendung eines Polyurethanpolymers nach Anspruch 2 als Bestandteil einer Klebstoff-, Dichtstoff- oder Beschichtungsmittelzusammensetzung.

## Claims

1. A method for cross-linking or curing an alkenyl ether group-containing polyurethane polymer having moisture-reactive end groups, wherein the moisture-reactive end groups are isocyanate groups (-NCO) or silane groups of formula -[(CH₂)ₚ-Si(R¹)_{3-q}(OR²)_{q}]ᵣ where p, q and r = 1, 2 or 3, R¹ = C₁₋₄ alkyl or -(CH₂)ₚ-Si(R¹)_{3-q}(OR²)_{q} and R² = C₁₋₄ alkyl, wherein the polyurethane can be obtained by reacting at least one alkenyl ether polyol containing at least one alkenyl ether group, in particular a 1-alkenyl ether group, and at least two hydroxyl groups (-OH) with at least one polyisocyanate containing at least two isocyanate groups (-NCO), wherein the polyisocyanate, with respect to the isocyanate groups, is used in molar excess relative to the hydroxyl groups in order to obtain an NCO-terminated polyurethane, and optionally the subsequent reaction of the NCO-terminated polyurethane with a silane, in particular with a silane of formula X-[(CH₂)ₚ-Si(R¹)_{3-q}(OR²)_{q}]ᵣ, where X is an NCO-reactive group, wherein, in a first step, the alkenyl ether groups are cationically cross-linked by exposure to radiation and, in a second step, the moisture-reactive groups are polymerized in a moisture-dependent manner.

2. A polyurethane polymer having alkenyl ether group-containing side chains and silicon-containing end groups of formula -[(CH₂)ₚ-Si(R¹)_{3-q}(OR²)_{q}]ᵣ where p, q and r = 1, 2 or 3, R¹ = C₁₋₄ alkyl or -(CH₂)ₚ-Si(R¹)_{3-q}(OR²)_{q} and R² = C₁₋₄ alkyl, wherein the polyurethane can be obtained by reacting at least one alkenyl ether polyol containing at least one alkenyl ether group, in particular a 1-alkenyl ether group, and at least two hydroxyl groups (-OH) with at least one polyisocyanate containing at least two isocyanate groups (-NCO), wherein the polyisocyanate, with respect to the isocyanate groups, is used in molar excess relative to the hydroxyl groups in order to obtain an NCO-terminated polyurethane, and the subsequent reaction of the NCO-terminated polyurethane with a silane, in particular a silane of formula X-[(CH₂)ₚ-Si(R¹)_{3-q}(OR²)_{q}]ᵣ, where X is an NCO-reactive group, preferably an amino or hydroxyl group, in particular an amino group.

3. The method according to claim 1 or the polyurethane polymer according to claim 2, **characterized in that** the at least one alkenyl ether polyol can be obtained by
A) Reacting an alkenyl ether, containing at least one alkenyl ether group and at least one functional group selected from -OH, -COOH, -SH, -NH₂ and derivatives thereof, with (i) an epoxide or (ii) a cyclic carbonate or derivative thereof; or
B) Reacting an alkenyl ether, containing at least one alkenyl ether group and at least one functional group selected from (i) epoxide groups and (ii) cyclic carbonate groups or derivatives thereof, with an alcohol, thiol, a carboxylic acid, or an amine or derivatives thereof.

4. The method or the polyurethane polymer according to claim 3, wherein the alkenyl ether polyol can be obtained by reacting an alkenyl ether, containing at least one alkenyl ether group and at least one functional group selected from -OH, -COOH, -SH, -NH₂ and derivatives thereof, with (i) an epoxide or (ii) a cyclic carbonate or derivative thereof, **characterized in that** the alkenyl ether polyol is an alkenyl ether polyol of formula (I) 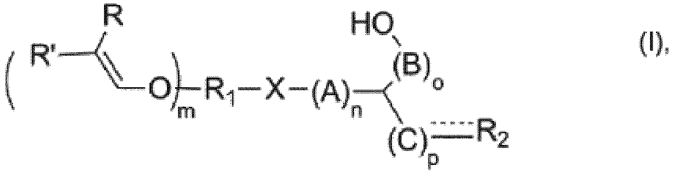 where
R₁ is an at least divalent organic group, in particular an at least divalent linear or branched, substituted or unsubstituted alkyl having 1 to 20 carbon atoms or linear or branched, substituted or unsubstituted heteroalkyl having 1 to 20 carbon atoms and at least one oxygen or nitrogen atom,
R₂ is an organic group, optionally having at least one -OH group and/or from 1 to 1000 carbon atoms, in particular an optionally divalent or polyvalent, linear or branched, substituted or unsubstituted alkyl having 1 to 20 carbon atoms or linear or branched, substituted or unsubstituted heteroalkyl having 1 to 20 carbon atoms and at least one oxygen or nitrogen atom,
X is O, S, C(=O)O, OC(=O)O, C(=O)OC(=O)O, NRₓ, NRₓC(=O)O, NRₓC(=O)NRₓ or OC(=O)NRₓ,
each of R and R' is independently selected from H, C₁₋₂₀ alkyl and C₂₋₂₀ alkenyl, wherein in particular one of R and R' is H and the other is C₁₋₄ alkyl or both R and R' are H,
each of A, B, and C are independently selected from CR"R"',
R" and R'" are independently selected from H, a functional group and an organic group, in particular H and C₁₋₂₀ alkyl, or R" and R'" together or with the carbon atom to which they are bonded are an organic group, or two of R" and R'" that are bonded to adjacent carbon atoms together form a bond in order to form a double bond between the adjacent carbon atoms,
------ is a single or double bond, wherein, if it is a double bond, the carbon
atom that is bonded to R₂ carries only one substituent R" or R"',
m is an integer of from 1 to 10, preferably 1,
n, p and o are each 0 or an integer of from 1 to 10, where n + p + o = 1 or more, in particular 1 or 2, and
Rₓ is H, an organic group or 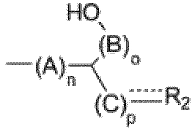
wherein, if Rₓ is not 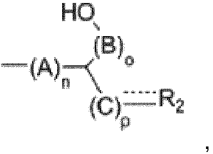 R₂ comprises at least one substituent that is selected from -OH and

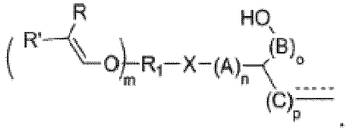

5. The method or the polyurethane polymer according to claim 3, wherein the alkenyl ether polyol can be obtained by reacting an alkenyl ether, containing at least one alkenyl ether group and at least one functional group selected from (i) epoxide groups and (ii) cyclic carbonate groups or derivatives thereof, with an alcohol, thiol, a carboxylic acid, or an amine or derivatives thereof, **characterized in that** the alkenyl ether polyol is an alkenyl ether polyol of formula (V) 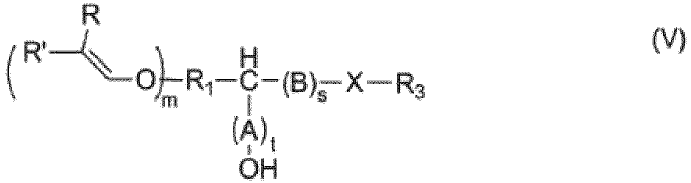 where
R¹ is an at least divalent organic group, in particular an at least divalent linear or branched, substituted or unsubstituted alkyl having 1 to 20 carbon atoms or linear or branched, substituted or unsubstituted heteroalkyl having 1 to 20 carbon atoms and at least one oxygen or nitrogen atom,
R₃ is an organic group, optionally having 1 to 1000 carbon atoms, in particular an optionally divalent or polyvalent, linear or branched, substituted or unsubstituted alkyl having 1 to 20 carbon atoms, a linear or branched, substituted or unsubstituted heteroalkyl having 1 to 20 carbon atoms and at least one oxygen or nitrogen atom, or a (poly)alkylene glycol group of formula -O-[CHRₐCH₂O]_{b}-R_{b}, where Rₐ is H or a C₁₋₄ alkyl group, R_{b} is H or 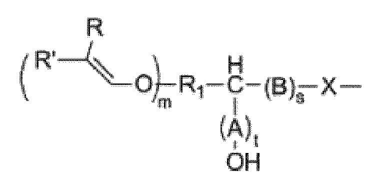
and b is from 1 to 100;
X is O, S, OC(=O), OC(=O)O, OC(=O)OC(=O), NR_{z}, NR_{z}C(=O)O, NR_{z}C(=O)NR_{z} or OC(=O)NR_{z},
each of R and R' is independently selected from H, C₁₋₂₀ alkyl and C₂₋₂₀ alkenyl, wherein in particular one of R and R' is H and the other is C₁₋₄ alkyl or both R and R' are H,
each of A and B is independently selected from CR"R"',
R" and R'" are independently selected from H, a functional group and an organic group, in particular H and C₁₋₂₀ alkyl, or R" and R'" together or with the carbon atom to which they are bonded are an organic group, or two of R" and R'" that are bonded to adjacent carbon atoms together form a bond in order to form a double bond between the adjacent carbon atoms,
m is an integer of from 1 to 10, preferably 1,
s and t are each 0 or an integer of from 1 to 10, where s + t = 1 or more, in particular 1 or 2, and
R_{z} is H, an organic group or 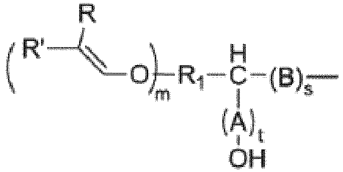
wherein if R_{z} is not 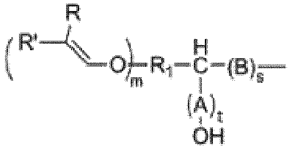
R₃ comprises at least one substituent that is selected from -OH and

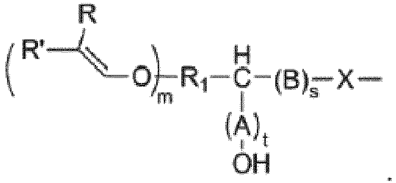

6. The method or the polyurethane polymer according to one of claims 1 to 5, **characterized in that** the alkenyl ether groups are vinyl ether groups.

7. The method or the polyurethane polymer according to one of claims 1 to 6, **characterized in that** the NCO-terminated, alkenyl ether group-containing polyurethane polymer can be obtained by reacting at least one alkenyl ether polyol containing at least one alkenyl ether group, in particular a 1-alkenyl ether group, and at least two hydroxyl groups (-OH), as well as at least one further polyol, in particular a polyether polyol, with at least one polyisocyanate containing at least two isocyanate groups.

8. The method or the polyurethane polymer according to one of claims 1 to 7, **characterized in that** the step of cross-linking the alkenyl ether groups takes place in the presence of a photoinitiator.

9. A cured or cross-linked polyurethane that can be obtained by means of the method according to one of claims 1 and 3-8.

10. A composition, in particular an adhesive composition, a sealant composition or a coating agent composition, containing at least one polyurethane polymer according to claim 2.

11. The use of a polyurethane polymer according to claim 2 as a component of an adhesive composition, a sealant composition or a coating agent composition.

## Revendications

1. Procédé pour réticuler ou durcir un polymère de polyuréthane contenant un groupe d'alcényle éther avec des groupes terminaux réactifs à l'humidité, lesdits groupes terminaux réactifs à l'humidité comprenant des groupes isocyanates (-NCO) ou des groupes silanes de la formule -[(CH2)_{P}-Si(R¹)3-_{q}(OR²)_{q}]ᵣ mit p, q et r = 1,2 ou 3, R¹ = C₁₋₄ alkyle ou -(CH₂)_{P}-Si(R¹)_{3-q}(OR²)_{q} et R² = C₁₋₄ alkyle, le polyuréthane étant présent par réaction d'au moins un polyol d'alcényle éther comprenant au moins un groupe d'alcényle éther, notamment un groupe 1-alcényle éther, et d'au moins deux groupes hydroxyles (-OH), avec au moins un polyisocyanate comprenant au moins deux groupes isocyanates (-NCO), le polyisocyanate en rapport avec les groupes isocyanates étant utilisé en un excès molaire comparativement aux groupes hydroxyles afin d'obtenir un polyuréthane à terminaison NCO, et la réalisation finale optionnelle du polyuréthane à terminaison NCO avec un silane, notamment un silane de la formule X-[(CH₂)_{P}-Si(R¹)₃- _{q}(OR²)_{q}]ᵣ, X étant un groupe réactif aux groupes NCO, les groupes d'alcényle éther étant réticulés par voie cationique par une exposition aux rayonnement dans une première étape, les groupes réactifs à l'humidité étant polymérisés en fonction de l'humidité dans une deuxième étape.

2. Polymère de polyuréthane avec des chaînes latérales comprenant un groupe d'alcényle éther et des groupes terminaux contenant de la silice de la formule -[(CH₂)_{P}-Si(R¹)_{3-q}(OR²)_{q}]ᵣ mit p, q et r = 1,2 ou 3, R¹ = C₁₋₄ alkyle ou -(CH₂)_{P}-Si(R¹)_{3-q}(OR²)_{q} et R² = C₁₋₄alkyle, le polyuréthane étant présent par réaction d'au moins un polyol d'alcényle éther comprenant au moins un groupe d'alcényle éther, notamment un groupe 1-alcényle éther, et d'au moins deux groupes hydroxyles (-OH), avec au moins un polyisocyanate comprenant au moins deux groupes isocyanates (-NCO), le polyisocyanate en rapport avec les groupes isocyanates étant utilisé en un excès molaire comparativement aux groupes hydroxyles afin d'obtenir un polyuréthane à terminaison NCO, et la réalisation finale optionnelle du polyuréthane à terminaison NCO avec un silane, notamment un silane de la formule X-[(CH₂)_{P}-Si(R¹)₃- _{q}(OR²)_{q}]ᵣ, X étant un groupe réactif aux groupes NCO, de préférence un groupe amino ou hydroxyle, notamment un groupe amino.

3. Procédé selon la revendication 1 ou polymère de polyuréthane selon la revendication 2, **caractérisé en ce qu'**au moins un polyol d'alcényle éther est présent par
A) réaction d'un alcényle éther, comprenant au moins un groupe d'alcényle éther et au moins un groupe fonctionnel sélectionnés parmi -OH, -COOH, -SH, -NH₂ et leurs dérivés, avec (i) un époxyde ou (ii) un carbonate cyclique ou un dérivé de ceux-ci ; ou
B) réaction d'un alcényle éther, comprenant au moins un groupe d'alcényle éther et au moins un groupe fonctionnel sélectionnés parmi des (i) groupes époxydes et (ii) groupes de carbonate cyclique ou leurs dérivés, avec un alcool, un thiol, un acide de carbone ou une amine ou des dérivés des composés précédents.

4. Procédé ou polymère de polyuréthane selon la revendication 3, le polyol d'alcényle éther étant présent par réaction d'un alcényle éther comprenant au moins un groupe d'alcényle éther et au moins un groupe fonctionnel sélectionnés parmi -OH, -COOH, -SH, -NH₂ et leurs dérivés, avec (i) un époxyde ou (ii) un carbonate cyclique ou un dérivé de ceux-ci, **caractérisé en ce que** le polyol d'alcényle éther est un polyol d'alcényle éther de la formule (I) 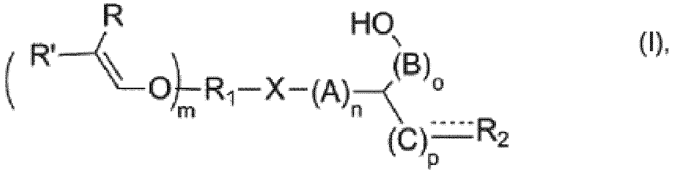
Rᵢ
étant un reste organique au moins bivalent, notamment un alkyle au moins bivalent linéaire ou ramifié, substitué ou non substitué avec 1 à 20 atomes de carbone ou un hétéroalkyle linéaire ou ramifié, substitué ou non substitué avec 1 à 20 atomes de carbone et au moins un atome d'oxygène ou d'azote.
R₂ étant un reste organique, en option avec au moins un groupe -OH et/ou 1 à 1 000 atomes de carbone, notamment en option un alkyle bivalent ou multivalent linéaire ou ramifié, substitué ou non substitué avec 1 à 20 atomes de carbone ou un hétéroalkyle linéaire ou ramifié, substitué ou non substitué avec 1 à 20 atomes de carbone et au moins un atome d'oxygène ou d'azote.
étant X O, S, C(=O)O, OC(=O)O, C(=O)OC(=O)O, NRₓ, NR_{X}C(=O)O, NR_{X}C(=O)NR_{X} ou OC(=O)NR_{X},
chaque R et R' étant sélectionné indépendamment parmi H, C₁₋₂₀ alkyle et C₂₋₂₀ alcényle, notamment un de R et R' étant H et l'autre C₁₋₄ alkyle ou les deux étant H, chaque A, B et C étant sélectionné indépendamment parmi CR"R"',
R" et R'" étant sélectionnés indépendamment parmi H, un groupe fonctionnel et une reste organique, notamment H et C₁₋₂₀ alcyle, ou R" et R'" ensemble ou avec l'atome de carbone auquel ils sont liés étant un radical organique, ou deux de R" et R"', qui sont liés à l'atome de carbone adjacent, formant ensemble une liaison afin de former une double liaison entre les atomes de carbone adjacents,
------ étant une liaison simple ou double, sachant que lorsqu'il est une liaison double, l'atome de carbone, lié à R₂, ne porte seulement un R" ou R'" substitué,
m étant un nombre entier de 1 à 10, de préférence 1,
n, p et o étant respectivement 0 ou un nombre entier de 1 à 10, n+p+o=1 ou plus notamment 1 ou 2, et
Rₓ H, étant un reste organique ou 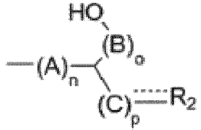 sachant que si Rx n'est pas 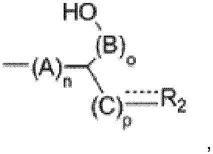 R₂ présente au moins un substitut, qui est sélectionné parmi -OH et

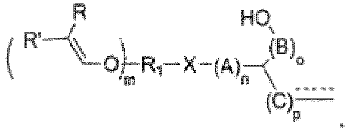

5. Procédé ou polymère de polyuréthane selon la revendication 3, le polyol d'alcényle éther étant présent par réaction d'un alcényle éther comprenant au moins un groupe d'alcényle éther et au moins un groupe fonctionnel sélectionnés parmi des (i) groupes époxydes et (ii) groupes de carbonate cyclique ou leurs dérivés, avec un alcool, un thiol, un acide de carbone ou une amine ou des dérivés des composés précédents, **caractérisé en ce que** le polyol d'alcényle éther est un polyol d'alcényle éther de la formule (V)
Rᵢ 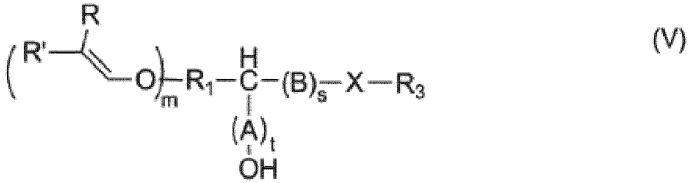 étant un radical organique au moins bivalent, notamment un alkyle au moins bivalent linéaire ou ramifié, substitué ou non substitué avec 1 à 20 atomes de carbone ou un hétéroalkyle linéaire ou ramifié, substitué ou non substitué avec 1 à 20 atomes de carbone et au moins un atome d'oxygène ou d'azote,
R₃ étant un radical organique, en option avec 1 à 1000 atomes de carbone, notamment en option un alkyle bivalent ou multivalent linéaire ou ramifié, substitué ou non substitué avec 1 à 20 atomes de carbone ou un hétéroalkyle linéaire ou ramifié, substitué ou non substitué avec 1 à 20 atomes de carbone et au moins un atome d'oxygène ou d'azote, ou étant un radical de polyalcylène glycol de la formule -O-[CHRₐCH₂O]_{b}-R_{b}, Rₐ H ou un radical C₁₋₄-alkyle, R_{b} H ou 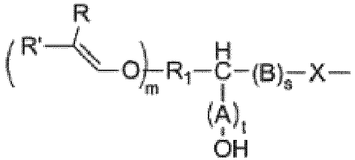
et b étant 1 à 100 ;
étant X O, S, OC(=O), OC(=O)O, OC(=O)OC(=O), NR_{z}, NR_{Z}C(=O)O, NR_{Z}C(=O)NR_{Z} ou OC(=O)NF,
chaque R et R' étant sélectionné indépendamment parmi H, C₁₋₂₀ alkyle et C₂₋₂₀ alcényle, notamment un de R et R' étant H et l'autre C₁₋₄alkyle ou les deux étant H, chaque A et B étant sélectionné indépendamment parmi CR"R"',
R" et R'" étant sélectionnés indépendamment parmi H, un groupe fonctionnel et une reste organique, notamment H et C₁₋₂₀ alcyle, ou R" et R'" ensemble ou avec l'atome de carbone auquel ils sont liés étant un radical organique, ou deux de R" et R"', qui sont liés à l'atome de carbone adjacent, formant ensemble une liaison afin de former une double liaison entre les atomes de carbone adjacents,
m étant un nombre entier de 1 à 10, de préférence 1,
s et t étant respectivement 0 ou un nombre entier de 1 à 10, s+t=1 ou plus notamment 1 ou 2, et
R_{z} H, étant un radical organique ou 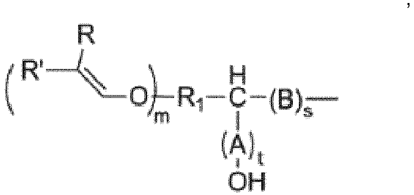 sachant que lorsque R_{z} n'est pas 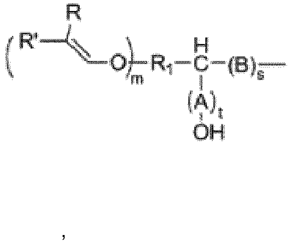
R₃ présente au moins un substitut, qui est sélectionné parmi -OH et

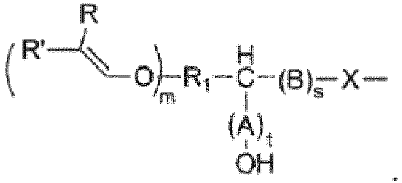

6. Procédé ou polymère de polyuréthane selon l'une quelconque des revendications 1 à 5, **caractérisé en ce que** les groupes d'alcényle éther sont des groupes d'éther vinylique.

7. Procédé ou polymère de polyuréthane selon l'une quelconque des revendications 1 à 6, **caractérisé en ce que** le polymère de polyuréthane contenant un groupe d'alcényle éther à terminaison NCO est présent par réaction d'au moins un polyol d'alcényle éther comprenant au moins un groupe d'alcényle éther, notamment un groupe 1-alcényle éther, et d'au moins deux groupes hydroxyles (-OH), ainsi qu'au moins un autre polyol notamment un polyétherpolyol avec au moins un polyisocyanate comprenant au moins deux groupes isocyanates.

8. Procédé ou polymère de polyuréthane selon l'une quelconque des revendications 1 à 7, **caractérisé en ce que** l'étape de réticulation des groupes d'alcényle éther s'effectue en présence d'un photo-amorceur.

9. Polyuréthane durci ou réticulé présent au moyen du procédé selon l'une quelconque des revendications 1 et 3 à 8.

10. Composé, notamment un composé de colle, mastic ou
d'agent de revêtement, comprenant au moins un polymère de polyuréthane selon la revendication 2.

11. Utilisation d'un polymère de polyuréthane selon la revendication 2 comme composant d'un composé de colle, de mastic ou d'agent de revêtement
